Europäisches Patentamt

European Patent Office

Office européen des brevets

(11) Veröffentlichungsnummer: **0 431 272 A2**

(12) **EUROPÄISCHE PATENTANMELDUNG**

(21) Anmeldenummer: 90118544.7

(22) Anmeldetag: 27.09.90

(51) Int. Cl.5: **F02M 51/06, F02D 41/20**

Die Bezeichnung der Erfindung wurde geändert
(Richtlinien für die Prüfung im EPA, A-III, 7.3).

(30) Priorität: 03.11.89 DE 3936619

(43) Veröffentlichungstag der Anmeldung:
12.06.91 Patentblatt 91/24

(84) Benannte Vertragsstaaten:
**DE ES FR GB IT SE**

(71) Anmelder: **MAN Nutzfahrzeuge
Aktiengesellschaft
Dachauer Strasse 667 Postfach 50 06 20
W-8000 München 50(DE)**

(72) Erfinder: **Henkel, Dietmar, Ing. grad.
Kopernikusring 50
W-8340 Neumarkt(DE)**

(54) **Verfahren und Vorrichtung zum Einspritzen eines Brennstoffes in einen Brennraum einer Brennkraftmaschine.**

(57) Die Erfindung bezieht sich auf ein Verfahren zum Einspritzen eines Brennstoffes in einen Brennraum einer luftverdichtenden, selbstzündenden Brennkraftmaschine. Zur Steuerung des Heizverlaufes wird vorgeschlagen eine auf magnetostriktivem Wege angesteuerte Düsennadel (42) mittels einer Elektronik in der Bewegung so zu beeinflussen, daß die Gesamteinspritzdauer tg in kleinere Abschnitte mit der Öffnungsdauer t0 und den Impulsabstand ta zerlegt wird. Der den Einspritzdüsen (7) zugeführte Brennstoff wird dabei einem Druckbehälter (5) mit konstantem Druck entnommen. Als Druckerzeuger dient eine konventionelle Einspritzpumpe (1). Die Einspritzdüsen (7) zur Durchführung des erfindungsgemäßen Verfahrens werden auf hydraulischem Wege in Schließstellung gehalten. Der Öffnungsvorgang wird durch ein magnetostriktives Stellglied (26) gesteuert und durch die Wechselwirkung der hydraulischen Kräfte auf die Düsennadel (42) nach Öffnung unterstützt. Durch die getaktete Einspritzung werden Druck- und Temperaturspitzen abgebaut, wodurch die Verbrennungsgeräusche und die NOx-Emissionen reduziert werden.

EP 0 431 272 A2

**VERFAHREN ZUM EINSPRITZEN EINES BRENNSTOFFES IN EINEN BRENNRAUM EINER LUFTVERDICH-TENDEN, SELBSTZÜNDENDEN BRENNKRAFTMASCHINE, SOWIE VORRICHTUNGEN ZUR DURCHFÜHRUNG DIESES VERFAHRENS**

Die Erfindung bezieht sich auf ein Verfahren gemäß dem Gattungsbegriff des Patentanspruches 1.

Zunehmend strengere Auflagen des Gesetzgebers hinsichtlich der zulässigen Obergrenzen emittierter Schadstoffe (Kohlenwasserstoffe, Stickoxyde) wie auch im Hinblick ausgestoßenen Schwarzrauches verlangen dem Entwickler von Dieselmotoren Anstrengungen ab, den innermotorischen Verbrennungsablauf so zu beeinflussen und zu steuern, daß oben genannte Vorgaben erfüllt werden.

Die Anforderungen an ein ideales Einspritzsystem sind vielfältig wie z. B.: Kennfeldsteuerung von Menge, Dauer und zeitlichem Beginn von "Voreinspritzung" und "Haupteinspritzung", welcher letztendlich eine entsprechende Steuerung des, die Qualität der Zerstäubung bestimmenden Kraftstoffdruckes im Düsenraum zugrundeliegt. Im Hinblick auf eine gleichmäßigere Kraftstoffverteilung im Brennraum sollte es ferner möglich sein, sowohl die mittlere Tröpfchengröße (des zerstäubten Kraftstoffes) sowie den Winkel des, die axiale Einspritzstrahl-Ausdehnung einschließenden Kegelmantels, gewollt in gewissen Grenzen - während eines Einspritzvorganges - beeinflussen zu können. Von weiterem Vorteil wäre eine zusätzliche Beeinflussung der Eindringtiefe des Tröpfchenstrahls in den Brennraum hinein.

Lösungen die einen Teil vorstehender Forderungen abdecken, stehen zwischenzeitlich mit dem sogenannten Pumpe-Düse-System zur Verfügung. Der damit realisierbare hohe Einspritzdruck mit dem daraus resultierenden besseren Zerstäubungsgrad des Kraftstoffes erklärt aufgrund der erzielten besseren Gemischaufbereitung vor allem die merkliche Schwarzrauchabsenkung. Mit Ausweichkolben - als Mittel zur Realisierung einer Voreinspritzung - versehene Versionen des Pumpe-Düse-Systems erlauben schließlich eine Verkürzung des Zündverzuges mit dem Resultat einer Verminderung des Verbrennungsgeräusches. Die verwirklichte Kennfeldsteuerung von Spritzbeginn und Einspritzdauer mittels elektromagnetisch gesteuertem Beipaßventil (parallel zur Einspritzdüse) stellt bereits einen hohen Grad an Flexibilität hinsichtlich maßgeschneiderter Beeinflussung des Verbrennungsablaufes dar. Das gesteckte Ziel, zu jedem Last- und Drehzahlpunkt des Motors auch immer eine optimal gestaltete Kraftstoffeinbringung zu gewährleisten, ist das Pumpe-Düse-Konzept jedoch ebenfalls nicht in der Lage zu erfüllen. Hinderlich ist dabei die von herkömmlichen Einspritzpumpen her bekannte und auch hier anzutreffende Abhängigkeit der Bereitstellungsgeschwindigkeit von Einspritzmenge und Einspritzdruck von der augenblicklichen Motordrehzahl (Verdrängergeschwindigkeit des Plungers). Um zum Beispiel hohe Einspritzmengen (pro Hub) in jeweils kurzen Zeitintervallen bei niedriger Motordrehzahl zu realisieren, bedarf es anderer Techniken.

Durch die DE-OS 28 64 921 ist es bekannt, eine Einspritzdüse mit elektromagnetischer Betätigung der Düsennadel vorzusehen. Ein Solenoid, welches die Düsennadel betätigt, kann durch eine elektronische Steuervorrichtung erregt werden. Durch eine solche Maßnahme kann die Bewegung der Düsennadel und damit der Einspritzverlauf vorprogrammiert werden. Allerdings ist der zeitliche Bewegungsverlauf der Düsennadel durch deren Massenträgheit erheblich eingeschränkt, so daß die Möglichkeiten der elektronischen Ansteuerung eben wegen dieser Massenträgheit der Düsennadel nur begrenzt ausgeschöpft werden können.

Der Erfindung liegt daher die Aufgabe zugrunde, die eingespritzte Brennstoffmenge als Funktion der Zeit zu erzwingen, um die Parameter Eindringtiefe und Kegelwinkel des Spritzstrahles sowie das Tröpfchengrößenspektrum im Sinne einer homogeneren Gemischaufbereitung freizügig steuern zu können.

Erfindungsgemäß wird diese Aufgabe gemäß den kennzeichnenden Merkmalen des Ansprüches 1 gelöst.

Durch die Ansteuerung des Stellgliedes mittels einer Elektronik ist man in der Lage, den Bewegungsablauf einer mit dem Stellglied gekoppelten Düsennadel in gewollter Weise zu variieren, um so den zeitlichen Brennverlauf entsprechend der gewünschten Form zu gestalten. Insbesondere in Verbindung mit einem magnetostriktiven Stab zur Realisierung der Stellgliedfunktion ist eine wesentlich flexiblere Gestaltung des Bewegungsablaufes der Düsennadel gegeben, da die Massenträgheit im Gegensatz zur elektromagnetischen Betätigung nahezu entfällt.

Vorteilhafte Modulationen des Bewegungsablaufes des Stellgliedes sind den Unteransprüchen 2 bis 7 zu entnehmen.

Vorrichtungen zur Durchführung des Verfahrens nach Anspruch 1 sind in den Ansprüchen 8 bis 16 enthalten.

Ausführungsbeispiele sind in Zeichnungen dargestellt. Es zeigt:

Figur 1 eine schematische Darstellung eines Einspritzsystems

Figur 2 eine Elektronik zur Ansteuerung eines Solenoides eines Stellgliedes

Figur 3 eine Elektronik mit Konstantfrequenzgenerator zur Ansteuerung des Solenoides des Stellgliedes bei einer Einspritzdüse mit einem Spreizkeillager

Figuren 3a - 3e Signale des Konstantfrequenzgenerators nach Figur 3

Figur 4 die Elektronik nach Figur 2 mit Konstantfrequenzgenerator nach Figur 3

Figuren 5 - 9 eine Variation der zeitlichen Modulation für den Bewegungsablauf des Stellgliedes

Figur 10 eine Einspritzdüse mit Solenoid und ferromagnetischem Stab als Stellglied

Figur 11 eine Einspritzdüse mit Ausbildung einer Düsennadel als Kolben

Figur 12 eine Einspritzdüse mit Ausbildung der Düsennadel als Kolben geringeren Durchmessers als Wegverstärker

Figur 13 eine Einspritzdüse mit einer Sitzspaltdüse

Figur 14 einen Längschnitt durch ein Spreizkeillager

Figur 15 einen Querschnitt durch das Spreizkeillager

Figur 16 eine Explosionszeichnung des Spreizkeillagers

Figur 17 ein Einspritzventil mit rein hydraulischer Nachstellung des Stellgliedes

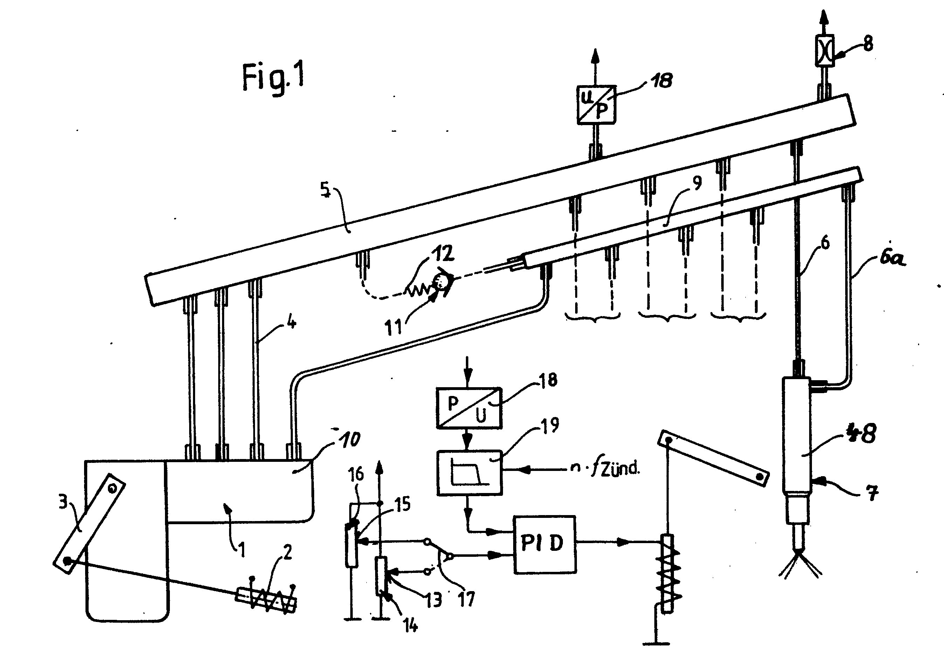

Eine schematische Darstellung eines Einspritzsystems ist in Figur 1 dargestellt.

Als Druckerzeuger dient eine Reiheneinspritzpumpe 1 üblicher Bauart. Angesichts des hohen Förderdruckes ( 1400 bar) sollte deren Nockenform so gewählt werden, daß der Kolben des Pumpenelementes eine nahezu harmonische Bewegung ausführt (mittenversetzter Kreis o. ä. als Nockenprofil). Bestimmt wird die augenblicklich geförderte Kraftstoffmenge von der Position eines Stellgliedes (im vorliegenden Falle der Anker eines Elektromagneten 2), alternativ ist auch ein mit Scheibenläufermotor realisiertes Stellglied denkbar, das unmittelbar auf einen Füllhebel 3 des Druckerzeugers einwirkt und seinerseits Bestandteil eines Konstantdruckreglers für den Behälterdruck ist. Die von den einzelnen Pumpenelementen der Reiheneinspritzpumpe 1 erzeugten Kraftstoffmengen sind über die kurzen Rohrabschnitte 4 einem Druckbehälter 5 zuzuführen, der als Rohrkörper ausgelegt ist. Dessen Innendurchmesser ist bei vorgegebener Verlegungslänge so auszulegen, daß das resultierende Innenvolumen einen Mindestwert von 0,5 dm³ besitzt.

Ein Vorteil der Rohrform des Druckbehälters 5 besteht in der Realisierung sehr kurzer Einspritzleitungen 6 vom Druckbehälter 5 zu Düsenhaltern 48 hin, was ähnlich, wie auch beim Pumpe-Düse-System, unkontrollierbare, wellenmechanische Beeinflussungen des Einspritzdruckes wirkungsvoll auszuschließen hilft.

Bei einer Verlegung des Druckbehälters 5 ist eine Mindestneigung zur Waagerechten zwecks Selbstentlüftung einzuhalten. Am höchsten Punkt des Druckbehälters 5 sorgt eine Dauerentlüftung in Form eines Kapillarrohres oder einer verstellbaren Drossel 8 für laufende Abführung von Gas aus dem Druckbehälter 5.

Bedingt durch die - an anderer Stelle eingehend beschriebene -Wirkungsweise eines Druckfreigabeventils in einer Einspritzdüse 7 muß im Falle des Anlassens zu Anbeginn ein Hilfsdruck zur Verfügung stehen, der sich (zwecks Vermeidung einer ungewollten Öffnungsbewegung der Düsennadel) erheblich schneller aufbaut als der Druck im Druckbehälter 5. Die Bereitstellung besagten Hilfsdruckes erfolgt über einen zweiten Druckbehälter 9, der über ein separates Pumpenelement 10 der Reiheneinspritzpumpe 1 mit Kraftstoff versorgt wird. Da diesem zweiten Druckbehälter 9 geringe Kraftstoffmengen entnommen werden (Leckage eines in der Einspritzdüse 7 befindlichen, später beschriebenen Hilfskolbensystems) benötigt er ein Speichervolumen von nur etwa 8 % des Raumvolumens des Druckbehälters 5. Die vom zweiten Druckbehälter 9 geförderten Überschußmengen an Kraftstoff gelangen über ein Überströmventil 11 in den Druckbehälter 5 um zur dortigen Druckanhebung genutzt zu werden. Eine weitere Funktion des Überströmventils 11 besteht in der Konstantregelung des Druckes im zweiten Druckbehälter 9. Mittels Vorspannen einer Ventilfeder 12 ist eine Justierung des Sollwertes des Druckes im zweiten Druckbehälter 9 möglich, womit auch die für den Anlaßvorgang gestellte Forderung, stets ein höheres Druckniveau im Behälter 9 verfügbar zu haben, gesichert ist.

Hinsichtlich der Formgebung des zweiten Druckbehälters 9 empfiehlt sich wiederum ein Rohrkörper. Aus Gründen der Selbstentlüftung ist - wie auch beim Druckbehälter 5 - Schrägverlegung angezeigt. Zur Sicherstellung der Selbstentlüftung ist - entgegen der zeichnerischen Darstellung - das Überströmventil 11 an den beiden, geodätisch höchstgelegenen Enden der Rohre als Verbindung zwischen den Druckbehältern 5 und 9 vorzusehen.

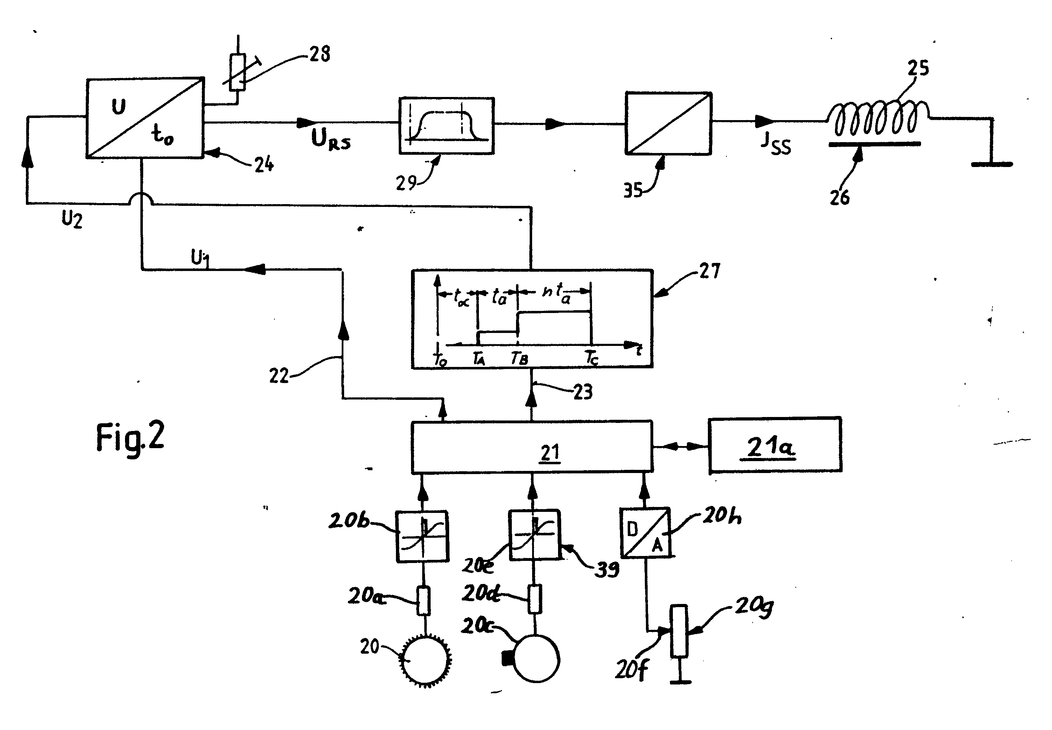

Der Regelkreis zur Gewährleistung der Konstanz des Arbeitsdruckes im Druckbehälter 5 ist als üblicher PID-Regler ausgeführt. Hierbei ist der Sollwert für den Normalbetrieb des Motors - zwecks Realisierung einer Feinjustage - in Form einer elektrischen Spannung einem Schleifer 13 eines konstantspannungsgespeisten Potentiometers 14 zu entnehmen. Im Augenblick des Motoranlassens ist dem Druckreglereingang ein verminderter Sollwert - einem zweiten Schleifer 15 eines zweiten Potentiometers 16 entstammend - zuzuführen, um die Wartezeit bis zum Erreichen des Betriebsdruckes im Druckbehälter 5 kurz zu gestalten. Vorgenannte Zeit, wie ebenso die Füllzeit eines axialen hydraulischen Spaltes im Hilfskolbensystem eines Druckfreigabeventils bestimmen letztlich die Wartezeit bis zur Freigabe der Kraftstoffeinspritzung für das Anlassen. Gesteuert wird die Zuweisung des jeweiligen Sollwertes in einfacher Weise von einem Drehzahlkomparator der seinerseits einen Umschalter 17 betätigt, je nachdem ob sich der Motor im Zustand des Anlassens oder des Normalbetriebes befindet. Zur Gewinnung des Istwertes des Behälterdruckes kann ein handelsüblicher Membrandruckaufnehmer 18 auf der Basis piezoresistiver Dehnmeßstreifentechnik herangezogen werden. Zweckmäßig ist es dem elektrischen Ausgangssignal des Membrandruckaufnehmers 18 ein Tiefpaßfilter 19 zur Unterdrückung der Druckoberwelligkeit nachzuschalten. Um auch anspruchsvollen Fällen einer schnelligkeitsoptimalen Druckregelung zu genügen, sollte die Eckfrequenz des Tiefpaßfilters 19 ein bestimmtes Vielfaches (etwa Faktor 3) der Zündfolgefrequenz des Motors betragen. Verwirklichbar ist diese Forderung mit Hilfe eines sogenannten "switched-capacitor-Filters" dessen Ansteuerung aus der, per Impulsgeber (radial an einen Anlasserzahnkranz 20 (Figur 2) angestellt) gewonnenen Zahnfolgefrequenz abgeleitet werden kann (solche Filter sind eine bekannte Technik).

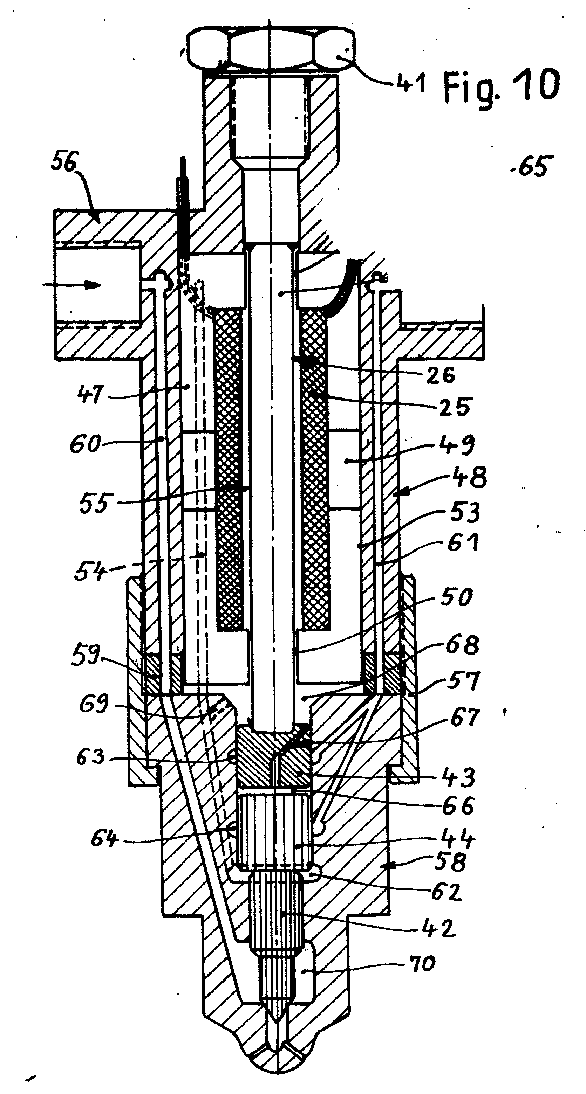

Die sehr hohe Verstellgeschwindigkeit des nachfolgend beschriebenen magnetostriktiven Stellgliedes 26 (Figur 10), zusammen mit der sehr guten Reproduzierbarkeit der Bewegungsausbeute pro Einheit des elektrischen Steuerstromes macht klar, daß die eingangs formulierte Pflichtenliste einer maßgeschneiderten Einspritzanlage nur im Zusammenwirken mit der Leistungsfähigen Hard- und Software moderner Steuer- und Leistungselektronik zu erzielen ist.

Für das Beispiel eines Einzylindermotors wesentliche Gesichtspunkte des Steuerungskonzeptes werden nachfolgend erläutert.

Zur Realisierung einer last- und drehzahlabhängigen Kennfeldsteuerung für Spritzbeginn und Zeitfunktion der eingebrachten Brennstoffmenge dient nach Figur 2 der Mikroprozessor 21 einschließlich Kennfeldspeicher 21a. Die Drehzahl als ein benötigter Zustandsparameter des Motors - und zugleich unabhängige Veränderliche des Kennfeldes - wird dabei vermittels radial an den AnlasserZahnkranz 20 einer Kurbelwelle angestellten ersten Impulsgebers 20a gewonnen. Dessen Ausgangsspannung erfährt im nachgeschalteten Zerocrossingdetektor 20b (einschließlich Impulsformer) eine vom Mikroprozessor 21 verarbeitbare Form. Sinngemäß gleich geschieht die Gewinnung des, für die Spritzbeginneinleitung bedeutsamen Bezugszeitpunktes To. Ein hierfür ebenfalls radial, diesmal jedoch an eine magnetische Unstetigkeit - am Umfang einer Nockenwelle 20c befindlich - angestellter elektromagnetischer zweiter Impulsgeber 20d sorgt im Zusammenwirken mit der Impulsaufbereitungseinheit 20e wiederum für die mikroprozessorkompatible Signalform. Die Belastung des Motors schließlich, als der zweiten unabhängig Veränderlichen des Kennfeldes erfolgt mittels analoger Abbildung der Gaspedalstellung mittels Schleifer 20f am konstantspannungsgespeisten zweiten Potentiometer 20g. Hier ist ein nachgeschalteter Analog-Digital-Wandler 20h verantwortlich für die Bildung einer vom Prozessor annehmbaren Signalform.

Mit der Leistungselektronik kommuniziert gemäß Figur 2 der Mikroprozessor 21 über zwei Signalpfade 22, 23 zum einen über den ersten Signalgeber 22 mit dem Start-Stopp-Signal zur Zu- und Abschaltung des Impulsdauer-Modulators 24 der seinerseits das Rohrsignal für den, das Solenoid 25 eines Stellgliedes 26 durchfließenden Strom

$$J_{SS}$$

liefert.

Das andere Ausgangssignal des Mikroprozessors 21 durchläuft über den zweiten Signalpfad 23 einen Digital-Analogwandler 27 und erzeugt an dessen Ausgang phasen- und zündfolgerichtig die Zeitfunktion einer Spannung von der eine Beeinflussung vor erwähnten Rohsignal-Musters des Solenoiderregerstromes ausgeht. Im einzelnen sei auf die Komponenten des, den Solenoidstrom

$$\dot{J}_{SS}$$

beeinflussenden Systems eingegangen.

Die Aufgabe des Impulsdauer-Modulators 24 besteht darin, ein Trägerfrequenzsignal zu erzeugen, das drei verschiedenen Forderungen genügen muß. Zum einen sollte besagtes Trägerfrequenzsignal aus einer Serie von Rechteckimpulsen konstanter Folgefrequenz

$$\frac{(\quad 1 \quad)}{\text{ta}}$$

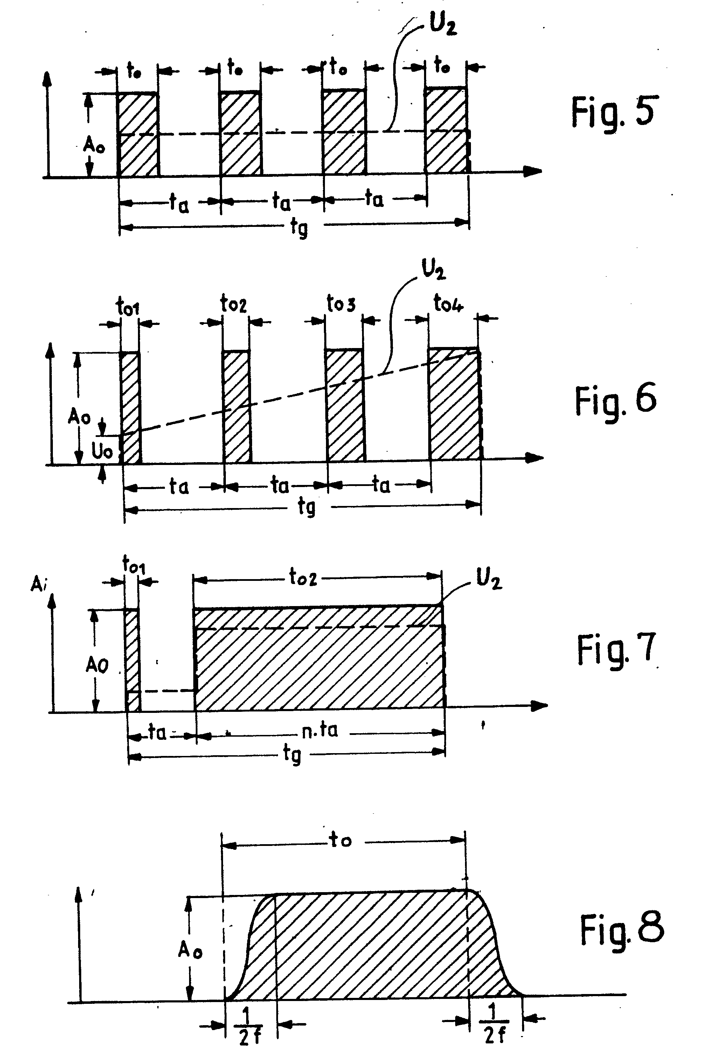

- manuell mittels zweitem Potentiometer 28 einstellbar - bestehen, wobei der Betrag der Folgefrequenz mindestens um den Faktor 0,7 kleiner sein muß als der der Resonanzfrequenz des Stellgliedes 26. Zweitens soll die Zeitdauer t0 der einzelnen Rechteckimpulse mittels einer Gleichspannung U2 oder einer nahezu beliebigen Zeitfunktion für U2 hinsichtlich ihres Betrages proportional der Spannungshöhe steuerbar sein (Figur 5, 6, 7, 8, 9). Und drittens soll es schließlich mit Hilfe eines Start-Stopp-Signales der zeitlichen Dauer tg = n • ta (n = ganze oder gebrochene Zahl) möglich sein, den Impulsdauer-Modulator 24 nur innerhalb dieses Zeitraumes zu aktivieren, und zwar beginnend im Zeitabstand tα nach Erscheinen der Zeitmarke t0 (siehe U2 in Figur 2 sowie Figur 7). Ergänzend sei zur Einstellung der Impulsfolgefrequenz f des Impulsdauer-Modulators 24 vermerkt, daß deren Betrag alternativ auch gleich der Resonanz - frequenz der Grundeigenform der Gasschwingung im Brennraum eingestellt werden kann. Auf diese Weise entsteht eine wesentliche Intensivierung des reaktionskinetisch gesteuerten Selbstverstärkungseffektes der Brennraumschwingung, was wiederum Anlaß zu einer willkommenen Vergrößerung der Schnellekomponente des zugehörigen Stehwellenfeldes gibt. Letztere führt zu einer Unterstützung des Wirk-Mechanismusses der Gemischaufbereitung, soweit er von der strömungsmechanisch bedingten Turbulenz von Drall- und Quetschströmungskomponente bestritten wird. Dies schließlich wirkt sich in einer willkommenen Schwarzrauchminderung aus, wie sie sich in bekannter Konsequenz aus einer guten Vermischung von Luftsauerstoff und verdampfendem Kraftstoff während der Verbrennungs phase ergibt. Voraussetzung für eine solche Justage der Impulsfolgefrequenz f (der periodischen Kraftstoffeinspritzung) ist allerdings, daß die mechanische Resonanzfrequenz des Stellgliedes 26 mindestens um den Faktor 1,4 größer ist als die Resonanzfrequenz der Gasschwingung im Brennraum. Dies trifft in der Regel zum Beispiel für die großen Brennraumdurchmesser von Nutzfahrzeug-Dieselmotoren zu.

Das vom Impulsdauer-Modulator 24 gebildete Rohsignal URS - gemäß Figur 5, 6, 7, 8, 9, aus einer Rechteckimpulsfolge bestehend -erfährt in einer Impulsformerstufe 29 eine Absteilung sowohl der Anstiegs- wie der Abfallflanken der einzelnen Rechteckimpulse. Diese Behandlung dient dem Zweck, mit einer Unterdrückung von Frequenzkomponenten des solenoidstrombestimmenden Steuersignales gleich oder größer als dem 0,707fachen der niedrigsten Resonanzfreguenz f des Stellgliedes 26 das unerwünschte Anstoßen von Stellglied-Eigenformen sicher auszuschließen. Zu fordern ist, daß der Absteilvorgang der jeweiligen Rechteckimpuls-Anstiegsflanke der Steuerspannung der Beziehung 0,5•A0•(1 - cos π•ft) folgt, hingegen das Verschleifen der jeweiligen Rechteckimpuls-Abstiegsflanke dem Ausdruck 0,5•A0•(1 + cos π•ft) siehe Figur 7. Dabei gilt 0 < t < $\frac{1}{2f}$ , worin f gemäß oben genannter Forderung gleich oder kleiner als das 0,707fache der Stellgliedresonanzfrequenz f0 sein muß, wenn A0 den beabsichtigten Wegsprung des Stellgliedes darstellt.

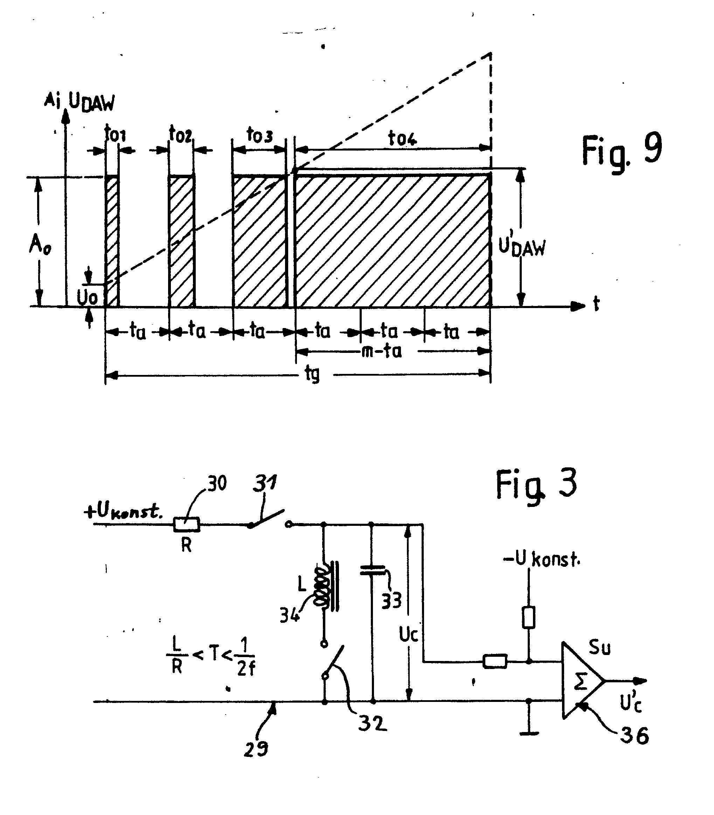

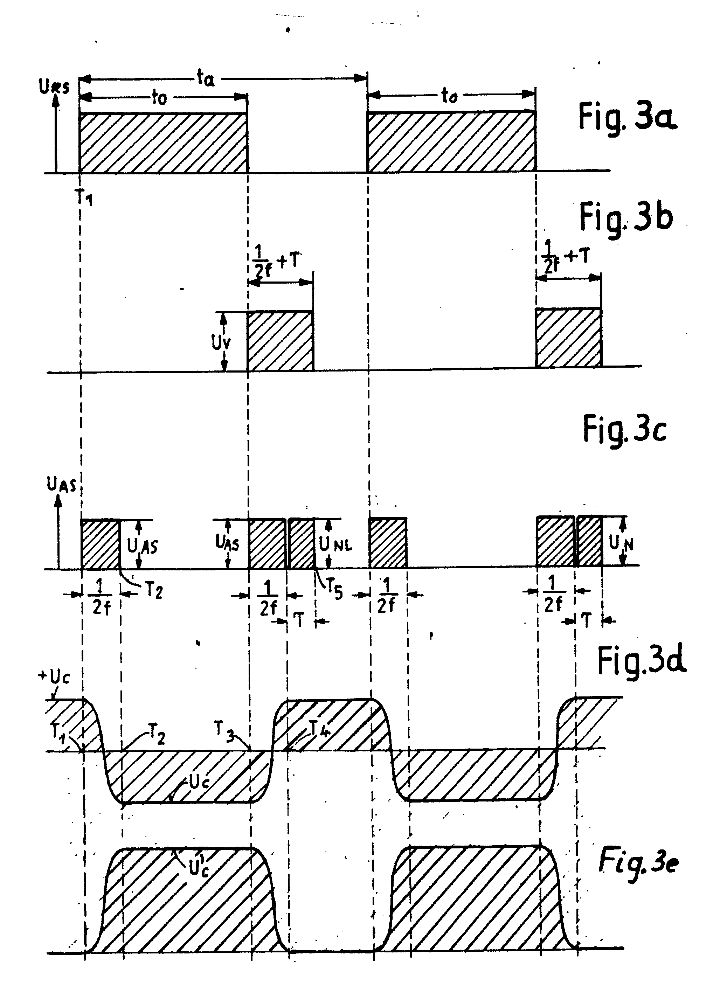

Bekannt sind weniger anspruchsvolle Impulsformerstufen in Ausführungen, wie sie in bekannter Weise durch kritisch gedämpfte RLC-Netzwerke (oder deren Kombination), Anwendung in der Hochstrom- Impulstechnik finden. Im Falle höherer Anforderungen an die Kurventreue der Flankenabsteilung sei anhand von Figur 3 auf das Beispiel einer anderen Hardwarelösung eingegangen.

Im wesentlichen handelt es sich dabei nach Figur 3 um ein, über einen Vorwiderstand 30 von einer positiven Konstantspannung + Ukonst. gespeistes dämpfungsarmes LC-Netzwerk. Mit Hilfe elektronischer Schalter 31 und 32 werden Umladevorgänge eines Kondensators 33 eingeleitet, deren Konsequenz solche Zeitfunktionen der Spannung Uc über den Kondensator 33 sind, daß daraus die die Flankenverformung ausmachenden, beiden trigonometrischen Therme (1± cos 2π•ft) leicht ableitbar sind.

Die zur Steuerung der Schalter 31 und 32 erforderlichen Impulse sind dabei wie folgt generierbar. Aus dem am Ausgang des Impulsdauer-Modulators 24 (Figur 2) verfügbaren - von der Spannung URS repräsentierten Signalmuster (Figur 3a) wird von den Rechteckimpulsanstiegs- wie -abstiegsflanken eine Monoflopfunktion mit der Impulsdauer $\frac{1}{2f}$ und der Ausgangsspannung UAS zwecks des Schließens des Schalters 32 angestoßen (Figur 3c) wobei diese Monoflopfunktion am Ausgang einer "oder"-Verknüpfung erhältlich ist, die ihrerseits eingangsseitig die Ausgangssignale von zwei Monoflops (jeweils anstiegs- und abstiegsflankengesteuert vom Signalmuster gemäß Figur 3a) mit der Impulsdauer $\frac{1}{2f}$ (Figur 3c) eingespeist bekommt. Der zum Zeitpunkt des Flankenanstiegs des Rohsignals URS angeworfene erste Monoflop liegt am nichtinvertierenden Ausgang eines unmittelbar von URS gespeisten Schmitt-Triggers, hingegen wird der vom Flankenabstieg von URS (Figur 2) getriggerte zweite Monoflop vom invertierenden Ausgang vorgenannten Schmitt-Triggers gespeist. Zur gleichen Zeit wird -ausschließlich vom Flankenabfall von URS abgeleitet - ein dritter Monoflop mit der Impulsdauer $\frac{1}{2f}$ +τ angesteuert (Figur 3b) von dessen Ausgangsspannung UV die Schließimpulsspannung UAS mittels Differenzbildner subtrahiert, eine zweite Steuerimpulsspannung UNL (am Ausgang des Differenzbildners verfügbar) der Dauer τ entsteht, die ihrerseits den Schalter 31 kurzzeitig schließt.

Wird davon ausgegangen, daß zum Zeitpunkt T0 (siehe 27 Figur 2) ein weiterer Monoflop - für jedes neue Arbeitsspiel einmalig vorbereitend in Aktion tretend - von einer Zerocrossing-Einheit 39 (Figur 2) für die Dauer τ' angeregt und zugleich "oder"-verknüpft mit den Schließimpulsen UAS (Ansteuerung Schalter 32; Figur 3) auf den Schalter 32 im wiederum schließenden Sinne wirkt, ist damit die, vor Beginn des Arbeitsspieles zu fordernde, polaritätsrichtige Spannungskonditionierung des Kondensators 33 sichergestellt.

Im solchermaßen vorgespannten Zustand des Kondensators 33 leitet der Schließvorgang des Schalters 32 zum Zeitpunkt T1 (markiert den Beginn des arbeitsspielrelevanten Einspritzvorganges mit dem Flankenanstieg des ersten Modulationsimpulses) den Entladevorgang des Kondensators 33 über eine Umladedrossel 34 ein. Genügt die Abstimmung von Kondensator 33 und Umladedrossel 34 der Beziehung für die elektrische Resonanzfrequenz

$$f = \frac{1}{2\pi\sqrt{L \cdot C}} < 0,707 \cdot f0$$

(f0 = Stellgliedresonanzfrequenz) verläuft die Kondensatorspannung innerhalb des Zeitintervalles T1 - T2 = $\frac{1}{2T}$ wie in Figur 3d dargestellt. Nunmehr befindet sich der Kondensator 33 auf dem Spannungsniveau - UC bis zum Erreichen des Zeitpunktes T3. Ab diesem leitet Schalter 32 erneut einen Schließvorgang ein, dem sich ein entsprechender Umladevorgang des Kondensators 33 bis zum Zeitpunkt T4 anschließt. Unmittelbar danach wird Schalter 31 für die Zeitdauer $\tau$ geschlossen (Schalter 32 ist geöffnet!) um den durch Wirkleistungsverluste im Schwingkreis 33, 34 bedingten, geringfügigen Spannungsrückgang von UC zu korrigieren. Um diesen "Nachladevorgang" während des Zeitraumes T4 - T5 möglichst kurz zu gestalten, ist auf die Erfüllung der Bedingung $\frac{L}{R} < \frac{1}{2T}$ zu achten.

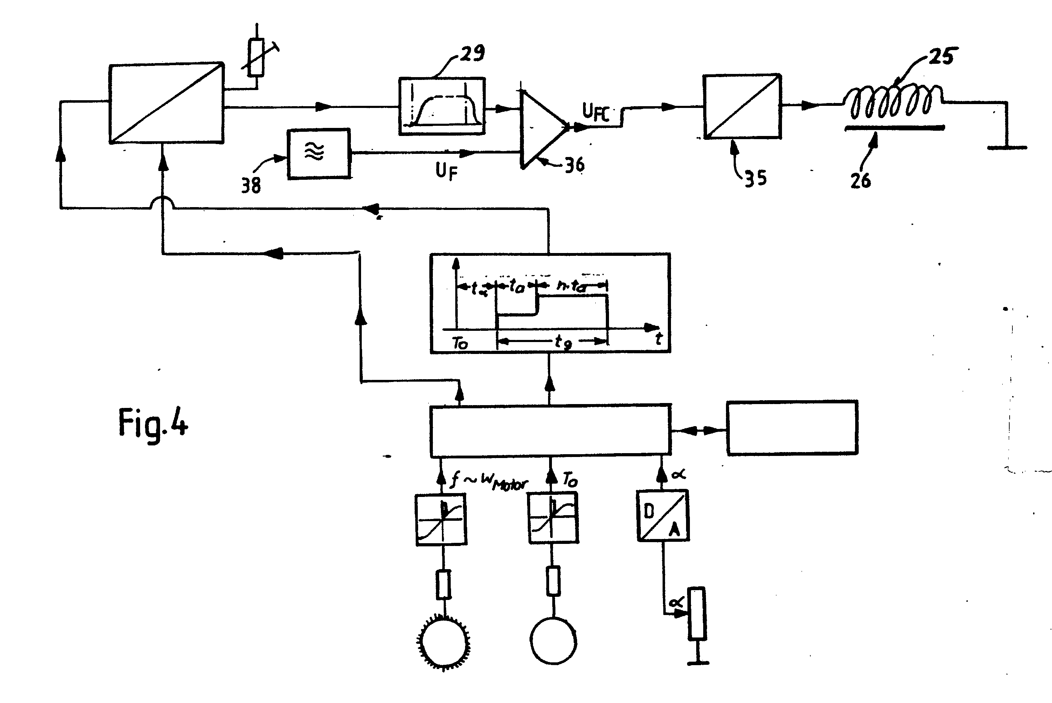

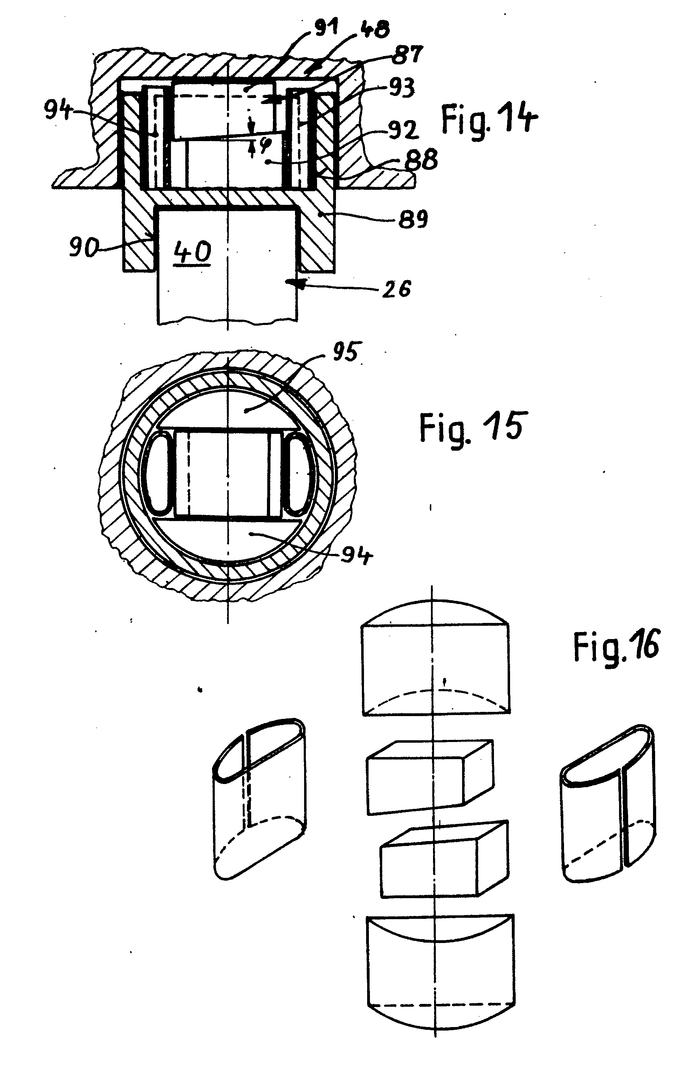

Um die Kondensatorspannung UC (siehe Figur 3d) in eine Form gemäß Figur 3c zu überführen ist UC mit einem invertierenden Summierverstärker 36 nachzubehandeln (Figur 3) dessen zweiter Summiereingang ständig mit der Spannung - Ukonst beaufschlagt ist. Der am Summierausgang erhaltene Steuersignalverlauf UC ist nunmehr als Sollwert zur Führung eines Spannungsstromwandlers 35 (Figur 2) geeignet, wird zuvor jedoch mit Hilfe eines nichtinvertierenden Summierverstärkers 36 (Figur 4) mit einem "Formiersignal" eines selbstadaptierenden Spreizkeillagers 87 (Figur 14) überlagert. Das Formiersignal entstammt nach Figur 4 einem harmonischen Konstantfrequenzgenerator 38 und folgt der Beziehung VF = UF0 · sin (2$\pi$·ft) worin f gleich oder größer sein sollte als die Eigenfrequenz der axial ausgebildeten Grundeigenform eines ferromagnetischen Stabes (als Bestandteiles des Stellgliedes 26). UF sollte infolge Auslegung eine solche Erregung H des hydraulisch vorgespannten ferromagnetischen Stabes auslösen, daß die davon erzeugte Wechselamplitude des Stellgliedweges 26 sehr klein ist (≤ 1$\mu$m). Im Zusammenwirken mit der genügend groß gewählten Formiersignalfrequenz kommt es zu einem periodischen Öffnen der Berührungskontakte an den Keilauflageflächen, womit die Haftreibung gegenüber radialen Verschiebebewegungen der Spreizkeile des Spreizkeillagers 87 (Figur 14) unterdrückt wird.

Die in vorstehend beschriebener Weise additiv gemischten Signale UC und UF ergeben am Ausgang des Summierverstärkers 36 die neue Spannung UFC, die im Spannungsstromwandler 35 eine Umwandlung in einen proportionalen Solenoiderregerstrom Iss erfährt. Diese Umwandlung in einen eingeprägten Strom Iss ist notwendig, um Rückwirkungen von magnetoelastischen Effekten im ferromagnetischen Stellstab des Stellgliedes 26 auf die Induktivität des Solenoids 25 und damit den Erregerstrom Iss selbst ausschließen zu können. Variationen des Einspritzverlaufs, welcher durch die Elektronik gesteuert wird, können aus den Figuren 5 bis 9 ersehen werden.

Figur 5 zeigt die Zeitabhängigkeit eines Öffnungsquerschnittes A0 und der Eingangsspannung U2 des Impulsdauer-Modulators 24 (Figur 2). Eine Gesamteinspritzdauer tg wird dabei durch Schwarz-Weiß-Takten in eine Serie kleinerer zeitlicher Abschnitte konstanten tif fnungsquerschnittes unterteilt, deren jeweilige Öffnungsdauer t0 beträgt. Der Impulsabstand beträgt ta. Das Verhältnis der Öffnungsdauer t0 zu der Impulsdauer ta ist dabei konstant gewählt.

Die Figur 6 stellt jeweils eine Funktion des Öffnungsquerschnittes A0 und der Eingangsspannung U2 des Impulsdauer-Modulators 24 dar (Figur 2), wobei die Öffnungszeiten t01 bis t04 der einzelnen Impulse proportional mit der Zeit t anwachsen.

Eine Piloteinspritzung mit nachfolgender Haupteinspritzung ist in Figur 7 wiedergegeben. Die Gesamteinspritzdauer tg wird in zwei Abschnitte unterteilt. Der erste Abschnitt mit der Öffnungsdauer t01 stellt die Piloteinspritzung dar, der im zeitlichen Abstand ta die Haupteinspritzung mit der Dauer t02 folgt.

Nach Figur 8 gehorchen die An- und Abstiegsflanken der Rechteckimpulse nach den Figuren 5 bis 7 einer harmonischen Kurvenform gemäß der Funktion A = 0,5·A0· (1 - cos 2$\pi$·ft) für die Anstiegsflanke und entsprechend Funktion A = 0,5·A0·(cos 2$\pi$·ft + 1) für die Abstiegsflanke für den Definitionszeitraum 0 < t < $\frac{1}{2T}$ , wobei A0 den größten Öffnungsquerschnitt des Stellgliedes 26 (Figur 2 und Figur 4) darstellt und die Frequenz f mindestens um den Faktor 0,707 kleiner ist als die mechanische Resonanzfrequenz des Stellgliedes 26.

Nach Figur 9 folgt der zeitliche Verlauf des Verhältnisses von Öffnungsdauer t0 zum Impulsabstand ta einer Geraden, deren Steilheit so gewählt ist, daß noch vor Beendigung der Gesamteinspritzdauer tg das Verhältnis $\frac{t0}{ta}$ den Wert 1 erreicht.

Ausführungsformen von Einspritzventilen zur Durchführung des erfindungsgemäßen Verfahrens sind in den Figuren 10 bis 17 dargestellt. Das Einspritzventil stellt eine wesentliche Komponente der Erfindung dar.

Die Ventile bestehen entsprechend ihrem Wirkprinzip aus den zwei Hauptkomponenten Gehäuse und Stellglied, wobei das Gehäuse aus austenitischem Material besteht.

Figur 10 zeigt ein Einspritzventil, bei dem das Stellglied 26 durch die magnetische Kraft des Solenoids 25 betätigt wird.

Das Stellgliedteil 26 seinerseits besteht aus dem ferromagnetischen Stab 40 der mittels Schweißung formschlüssig mit einer Schraube 41 verbunden ist. Ein Formschluß per Schweißen kann jedoch in solchen Fällen entfallen, in denen die auf eine Düsennadel 42 wirkende hydraulische Verschiebekraft (Öffnungsbeginn des Ventils) mit Sicherheit ausreicht, stets die - vom Zeitgradienten der gewünschten Öffnungsgeschwindigkeit des Stabes 40 her bestimmt - Summe der Trägheitskräfte wie sie von den einzelnen zu beschleunigenden Massen (Düsennadel 42, Kolben 43, 44, Stab 40) ausgeht, zu überschreiten. Zudem ist alternativ (zur Schweißverbindung) auch ein einfaches "Einlegen" des Stabes 40 denkbar, was allerdings - ähnlich wie im Stirnbereich des Kolbens 43 - eine zylindrische Vertiefung in der Stirn des Schaftes der Schraube 41 erforderlich macht um auch das obere Ende des Stabes 40 radial zu führen. Durch erste und zweite Luftspalte 50 und 51 getrennt umgibt den Stab 40 ein Solenoid 25 aus isoliertem Kupferdraht die in einen magnetischen Rückschluß 47 aus geblechtem, weichmagnetischem Material hoher Permeabilität und Sättigungsfeldstärke gebettet ist (mittels Gießharz formschlüssig am Düsenhalter 48). Unterbrochen ist der Rückschluß von einem seriell eingefügten (eingeklebt) Dauermagneten 49 der sich durch ein hohes Energieprodukt von etwa 200 kJ/m³ und eine ebenfalls hohe Koerzitivfeldstärke von ca. 1200 kA/m³ auszeichnet. Die Wahl der Magnetlänge ist mit dem magnetischen Widerstand des magnetischen Rückschlusses 47 und der zwei Luftspalte 50 und 51 so abzustimmen, daß im magnetostriktiven Stellglied 26 eine Feldstärke von etwa 88 kA/m vorherrscht. In Abwandlung des Aufwandes ist auch der Einsatz einer modifizierten Legierung des Materials für den Stab 40 denkbar, die anstelle des positiven Vorzeichens der Magnetostriktion ein negatives Vorzeichen aufweist. In vorteilhafter Weise entfällt dann die Notwendigkeit einer dauermagnetischen Vorspannung als Mittel zur Reduzierung der Stromwärmeverluste des Erregerstroms in der Wicklung des Solenoids 25.Erkauft werden muß diese negative Magnetostriktion allerdings mit einem Verlust der annähernd linearen Beziehung zwischen steuerndem Erregerstrom und davon erzeugten Stellweg, was später noch erläuterte Konsequenzen hinsichtlich des Aufwandes zur Linearisierung bei der Steuersignalgenerierung hat. Befestigt ist der Rückschluß 47 mittels Kleber am Düsenhalter 48 und zwar im Bereich der Spalte 52 und 53. Axiale Durchbrüche im Stirnbereich des Düsenhalters 48 ermöglichen das Herausführen der beiden Solenoidanschlußdrähte.

Im Falle komplizierterer Zeitfunktionen der gewünschten Düsennadelbewegung muß mit einem Gehalt höherfrequenter Komponenten im Spulen-Erregerstrom gerechnet werden. Die dann nicht auszuschließenden, im Umfangsbereich des ferritischen Stabes St transformatorisch erzeugten Wirbelströme sind Ursache für das Freiwerden von Verlustwärme. Diese abzuführen kann es erforderlich machen, die den Leckagekraftstoff ableitende Leckageleitung 54 entgegen der Darstellung - nicht durch den Düsenhalter 48 zu führen, sondern durch den Luftspalt 50, anschließend entlang eines Ringspaltes 55 um ihn schließlich durch eine axiale Bohrung in der Schraube 41 des Ventils in Richtung ersten Anschluß 56 zum Tank zu entlassen. Zwei axiale, diametral gegenüberliegende Nuten - nicht dargestellt - am magnetischen Rückschluß, im Bereich des Luftspaltes 50, sorgen in diesem Zusammenhang für einen geringen Strömungswiderstand. Der Rohr- bzw. Schlauchanschluß für den Leckagekraftstoff ist dann problemlos von der Stirnseite her in die Schraube 41 integrierbar, während er hingegen im zeichnerisch angedeuteten Lösungsfalle den Düsenhalter 48 waagrecht radial über eine nicht dargestellte Verschraubung verlassen würde.

Ein Überwurf-Gewindering 57 vermittelt ein kraftschlüssiges Anbinden eines Düsenkörpers 58 an den Düsenhalter 48. Ein in Umfangsrichtung gegen Verdrehung gesicherter Zwischenring 59 übernimmt neben einer Dichtfunktion zugleich das axiale Weiterführen des unter Behälterdruck stehenden Kraftstoffes innerhalb der ersten und zweiten Bohrung 60 und 61 sowie die Entsorgung des Leckagekraftstoffes in die Leckageleitung 54.

Zerstäuberteil, Kraftstoffzuführung zur Düsennadel 42, sowie Formgebung der Düsennadel 42 entsprechen beim vorliegenden Druckfreigabeventil an sich bekannten Auslegungsgesichtspunkten. Zu achten ist auf eine genügende Länge des ferromagnetischen Stabes 40 (dessen genutzte, steuerbare magnetostriktive Längenänderung beträgt etwa 1,6 Promille) um die unerwünschte Drosselwirkung des Düsennadelsitzes (im geöffneten Zustand!) innerhalb angemessener Grenzen zu halten. Mit einer optimalen Dimensionierung der Dichtflächengeometrie des Düsennadelsitzes ist vorgenannte Drosselwirkung zusätzlich minimierbar (der hohe Kraftstoffvordruck erlaubt größeren mittleren Durchmesser der dichtenden Kreisringfläche).

Neu ist das Fehlen einer dichtkraft- und zugleich öffnungsdruckbestimmenden Feder zur Niederhaltung der Düsennadel 42 deren Funktion hier von einer hydraulischen Hilfsvorrichtung wahrgenommen wird, die - in Abwandlung der bisherigen Aufgabe -einer weitgehend hysteresefreien und unelastischen Ankoppelung (Kraftschluß) der Düsennadel 42 an den Bewegungszustand des Stellgliedes 26 dient.

Wesentliche Komponenten vorgenannter Hilfsvorrichtung sind die beiden Kolben 43 und 44. Im Bereich der axialkraftaufnehmenden Stirnfläche der Düsennadel 42 und des Kolbens 44 ist eine Leckagekraftstoff-sammelnde Leckagenut 62 vorgesehen, in die die Leckageleitung 54 mündet. Weitere Ringnuten 63, 64 befinden sich in jeweils halber Höhe sowohl des ersten Kolbens 43 wie des zweiten Kolbens 44 um dort für die Zuführung des Vorsteuerdruckes vom Druckbehälter 9 (Figur 1) über einem zweiten Anschluß 65 zu sorgen.

Der Entlüftung eines hydraulischen Spaltes 66 dient die Kapillarbohrung 67 an deren Ende sich eine weitere sehr dünne Bohrung ausschließt (Durchmesser derselben beträgt nur ein geringes Vielfaches der Dichtspaltweite der beiden Kolben 43, 44 also ca. 8μm; deshalb Laserbohrung). Der über vorgenannte Kapillarbohrung 67 in den "Leckageraum" 68 entlassene Kraftstoff gelangt von dort schließlich unter Passieren einer umfangsversetzten Bohrung 69 in die Leckageleitung 54. Eine stirnseitige, axiale Vertiefung am oberen Ende des ersten Kolbens 43 dient der Abstützung des ferromagnetischen Stabes 40.

Die Wirkungsweise des elektromagnetisch gesteuerten Druckfreigabeventils ist wie folgt zu verstehen.

Wichtiger Bestandteil des Gesamtsystems ist der ferromagnetische Stab 40 der aufgrund seiner besonderen "magnetomechanischen" Eigenschaften die angestrebte schnelle Düsennadelbewegung überhaupt erst ermöglicht. Letztere Fähigkeit verdankt das Stellglied 26 dem Vermögen, sich unter der Einwirkung eines magnetischen Feldes auszudehnen und bei Abschalten des gleichen Feldes diese Ausdehnung wieder rückgängig zu machen. Materialeigenschaften dieser Art sind unter dem Begriff "Magnetostriktion" bekannt und finden z. B. bei Nadeldruckern und Ultraschallgeneratoren Nutzanwendung. Das im vorliegenden Falle verwendete Stellgliedmaterial jedoch - eine Legierung aus Eisen, Terbium und Dysprosium mit Kristallvorzugslage -zeichnet sich durch eine besonders hohe Magnetostriktion, also Bewegungsgewinn pro Einheit der eingeprägten magnetischen Induktion, aus. Sie beträgt mit 1,6 Promille Längenzunahme bei maximaler Induktion ein Vielfaches dessen, was für marktgängige Materialien die über magneto- und elektrostriktive Eigenschaften verfügen, bislang bekannt war. Es ist nicht auszuschließen, daß die Materialforschung weitere Legierungen mit ähnlich hoher Magnetostriktion bei noch günstigerem Preis-Leistungsverhältnis dem Markt zugänglich macht.

Die Wechselwirkung des hydraulischen Koppelsystems mit dem magnetischen Stellglied 26 sei kurz anhand der Betrachtung des zeitlichen Ablaufs eines Einspritzvorganges einschließlich dessen Vorgeschichte erklärt.

Im geschlossenen Zustand der Düsennadel 42 ist das Solenoid 25 zunächst stromlos sodaß der magnetische Rückschluß 47 einschließlich dem Stab 40 ihre maximale, magnetische Aussteuerung - vom Dauermagneten 49 ausgehend - erfahren. Der Stab 40 befindet sich in diesem Zeitabschnitt im Zustand größter Längenausdehnung (in diesem Zusammenhang wird zugleich klar, daß für den Düsenhalter 48 - zwecks Vermeidung eines magnetischen Nebenschlußpfades - ein nicht magnetisierbares Material zu wählen ist, was aber nur solange Gültigkeit hat, wie der radiale Abstand des magnetischen Rückschlusses 47 von der Innenwand des Düsenhalters 48 gleich oder kleiner ist als die radiale Weite der Spalte 50 und 51; ferromagnetisches Material für den Düsenhalter 48 ist also dann zulässig, wenn der magnetische Rückschluß genügend radialen Abstand zum Düsenhalter 48 aufweist und wenn der axiale Abstand des Rückschlußes 47 zum Düsenhalter im Gebiet des Leckageraumes 68 ebenfalls dieser Bedingung genügt). Vom zweiten Druckbehälter 9 (Figur 1) werden die Ringnuten 63 und 64 über die zweite Bohrung 61 mit Druck versorgt, der zu Leckageströmen in den Dichtspalten der Kolben 43 und 44 sowie der Kapillarbohrung 67 führt. Sammelräume für diese Leckagen sind der Leckageraum 68 die Leckagenut 62 und der hydraulische Spalt 66. Der, den Dichtspalt des Düsennadelschaftes passierende Leckagestrom wird von der Leckagenut 62 gesammelt und von der Leckageleitung 54 abgeleitet. In gleicher Weise erfolgt die Ableitung der Leckage des Leckageraumes 68 und zwar über die Bohrung 69 und die Leckageleitung 54.

Im Spalt 66 baut sich ein Druck auf, der aufgrund des sehr kleinen - sich in den Dichtspalten der beiden Kolben 43 und 44 aufbauenden - Druckabfalles der beiden, in den Spalt 66 hineinfließenden Leckage-Volumenströme nur unbedeutend kleiner ist als der dem Druckbehälter 9 entstammende Druck. Voraussetzung dafür ist, daß die beiden vorgenannten Leckage-Volumenströme in der Kapillarbohrung 67 einen sehr hohen Druckabfall entwickeln, was mit der Wahl des sehr kleinen Bohrungsdurchmessers von ca. 8μm unschwer sicherzustellen ist. Ein Zusetzen dieser Bohrung während des Betriebs ist ausgeschlossen, da der engere Dichtspalt der Kolben 43 und 44 wie ein vorgeschalteter Partikelfilter für die Kapillarbohrung 67 wirkt.

Besagter Druck im Spalt 66 verschiebt die beiden Kolben 43, 44 in ihre jeweilige Endlage, die für den Kolben 43 von der Stirnfläche des Stabes 40 gebildet wird und für den Kolben 44 vom Schaftende der Düsennadel 42 bereitgestellt wird. Die am Schaft der Düsennadel 42 während der Schließphase angreifende Axialkraft ergibt sich somit als Differenz von zwei hydraulisch erzeugten Kräften. Dabei handelt es sich zum einen um die Öffnungskraft, herleitbar als Produkt, gebildet aus dem Druck des Druckbehälters 5 und der, diesem Druck zugänglichen, axial ausgerichteten hydraulischen Wirkfläche der Düsennadel 42 im Druckraum 70 und zum anderen aus der Schließkraft, entsprechend dem Produkt aus Druck im hydraulischen Spalt 66 (identisch mit dem Druck im zweiten Druckbehälter 9) und hydraulischer Wirkfläche des zweiten Kolbens 44 entsprechend dessen Durchmesser.

Soll vermittels Abheben der Düsennadel 42 das Zerstäuben von Kraftstoff eingeleitet werden geschieht dies auf folgende Weise:

Infolge Strombeaufschlagens des Solenoides 25 wird die dauermagnetische Vormagnetisierung zum großen Teil aufgehoben, was ein Verkürzen des Stabes 40 auf eine der gewünschten Öffnungsposition der Düsennadel entsprechende Länge zur Folge hat. Infolge der geringen Auffüllgeschwindigkeit des hydraulischen Spaltes 66 wird die Düsennadel 42, einschließlich den beiden nachgeordneten Kolben 43, 44 unter dem Einfluß des Druckes in einem Druckraum 70 der Düsennadel 42, der Verkürzung des Stabes 40 nahezu unverzögert folgen. Bei längerer Vorweilzeit der Düsennadel 42 im angehobenen Zustand (Spritzdauer), tritt aufgrund der endlichen Leckagemenge durch die Dichtspalte der beiden Kolben 43 und 44 hindurchtretend, ein unvermeidliches axiales Wachstum des Spaltes 66 ein, der sich eine ebensolche Bewegung sowohl des Kolbens 44 wie der Düsennadel 42 anschließt, daß der zwischen Düsennadelspitze und zugeordneten Sitz gebildete Spalt langsam wieder zuwächst. Um diesen Effekt von der Auslegung her zu minimieren, gilt es die Leckrate der Kolbendichtspalte z. B. durch Minimieren der Spaltweite letzterer möglichst klein zu halten. Auch mit einer Verlängerung der Kolben 43 und 44 kann die Leckagemenge klein gehalten werden. Besonders wirksam ist eine später ausführlich beschriebene Methode, die mit Hilfe einer besonderen Steuerung des Magnetflusses, z. B. vermittels dessen schneller Zu- und Abschaltung, zu einer ständigen Korrektur o. g.

Spaltwachstum entgegenwirkt was auch für die Sicherstellung der sogenannten Gleichförderung aller beteiligten Druckfreigabeventile (entsprechend der Zylinderzahl des Motors) von Bedeutung ist. Gefährdet ist die Gleichförderung nämlich dann, wenn die einzelnen Leckagemengen der Kolben 43 und 44 in allen Druckfreigabeventilen - bedingt durch deren unterschiedliche Dichtspalttoleranzen - unterschiedlich sind, wovon in der Praxis auszugeben ist.

Daß ein verbleibendes minimales Vergrößern des Spaltes 66 (während des Düsennadelabhebens) sogar erwünscht ist, zeigt eine Betrachtung der Ablaufphase des Dusennadelaufsetzens (also der Beendigung des Einspritzvorganges). Eingeleitet wird letztgenanntes infolge elektrischen Entregens des Solenoides 25. Der Stab 40 erfährt damit eine Verlängerung und erzwingt über die Komponentenfolge: Kolben 43 - hydraulischer Spalt 66 - Kolben 44 das Aufsetzen der Düsennadel 42. Wegen der inzwischen erfolgten, geringfügigen axialen Ausdehnung des Spaltes 66 setzt die Düsennadel bereits auf, bevor der Stab 40 seine endgültige Länge erreicht hat. Mit der verbleibenden Ersatzfederkraft, die dem Stab 40 somit noch innewohnt, drückt dieser den Kegel der Düsennadel 42 solange mit vermehrter Kraft als sonst in den zugeordneten Sitz, bis das vorerwähnte axiale Wachstum des Spaltes 66 wieder vollständig rückgängig gemacht wurde. Dieses Verhalten ist insofern erwünscht, als dies eine extrem schnelle Beendigung des Einspritzvorganges bedeutet, was erfahrungsgemäß einen Beitrag zur Minimierung des Kohlenwasseraustoßes im Motorabgas leistet.

Ergänzend sei angemerkt, daß das Volumen des Spaltes 66 leztlich also dessen axiale Ausdehnung - angesichts der angestrebten "hydraulischen Steife" so klein wie möglich zu bemessen ist. Seine Abmessungen resultieren aus der Aufgabe, zum einen die nicht auszuschließenden, verschiedenen thermisch bedingten Ausdehnungen von Stab 40 und Düsenhalter 48 auszugleichen sowie dem unerwünschten Einschlagvorgang der Düsennadel 42 (bleibende Verformung !) Rechnung zu tragen.

TP-N 50026

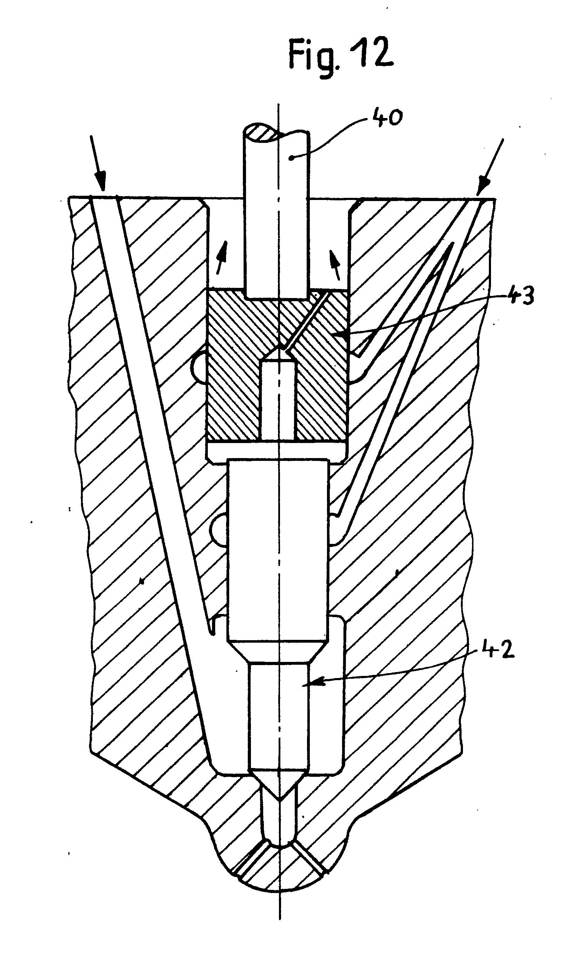

Eine alternative Ausbildung der hydraulischen Verbindung zwischen Düsennadel 42 und Stab 40 verdeutlicht Figur 11. Gezeigt sind dort nur die im unmittelbaren Umfeld der Modifizierung befindlichen Komponenten.

Grundgedanke der geänderten Ankoppelung ist die Verwendung eines höheren Vordruckes aus dem zweiten Druckbehälter 9 (Figur 1) zur Einspeisung der Leckagemenge in den Spalt 66 über die Ringnuten 63 und 64. Bei dem ersten Kolben 43 mit einem Durchmesser gleich dem des Schaftes der Düsennadel 42, ergibt sich eine im Bewegungsteil des Druckfreigabeventils massenärmere und insgesamt kleinere Ausführung bei zugleich geringerem Fertigungsaufwand. Diese Vorteile sind jedoch mit einer, allerdings nur geringen Erhöhung der Antriebsleistung des Druckerzeugers zu erkaufen.

Erhöhter Druck als hier verwendetes Mittel zur Bereitstellung der erforderlichen Anpreßkraft der Düsennadelspitze auf den zugeordneten Sitz, ist gemäß Figur 1 in einfacher Weise vermittels geeigneter Erhöhung der Vorspannkraft der Ventilfeder 12 des Überströmventils 11 (Figur 1) zu erreichen. Ähnlich, wie auch im Falle des Einsatzes von zwei Kolben, ergibt sich die Schließkraft der Düsennadel 42 aus der Differenz der beiden gegeneinander gerichteten Kräfte entsprechend den beiden Produkten: hydraulische Wirkfläche des ersten Kolbens 43 multipliziert mit dem Druck aus dem zweiten Druckbehälter 9 minus hydraulische Wirkfläche der aufsitzenden Düsennadel 42 multipliziert mit dem aus dem ersten Drückbehälter 5 (Figur 1) stammenden Druck. Natürlich sollte ein zuverlässiges Schließen des Ventils auch dann gewährleistet sein, wenn sich die Düsennadel 42 im abgehobenen Zustand befindet. Dies ist dann der Fall (zweite Dimensionierungsbedingung) wenn die vom Spalt 66 ausgehende auf den ersten Kolben 43 wirkende Axialkraft größer ist als die an der Düsennadel 42 angreifende Kraft (Produkt aus hydraulischer Wirkfläche der abgehobenen Düsennadel 42 multipliziert mit dem aus dem ersten Druckbehälter 5 stammenden Druck.

Das Wirkprinzip, d. h. die Steuerung des Abhebe- und Aufsetzvorganges der Düsennadel geschieht in gleicher Weise wie bereits bei der Version mit zwei Hilfskolben nach Figur 10 beschrieben, nämlich vermittels Erregen bzw. Entregen des magnetfelderzeugenden Solenoides 25 (Figur 10) bedarf also keiner weiteren Erläuterung.

Bei konsequenter Verfolgung eines Minimierens des Fertigungsaufwandes empfiehlt es sich, die gegen Atmosphärendruck (Kraftstoff-Tank) abfließende Komponente des, dem ersten Kolben 43 entstammenden Leckagekraftstoffes durch den Ringspalt 55 zu schleusen. Von dort kann er über eine axiale Bohrung durch die Schraube 41 (Figur 10) der dort aufgesetzen Rohrverschraubung zugeführt werden. Anders verhält es sich mit dem verbleibenden Teilleckagestrom des Kolbens der Düsennadel 42, der gegen den an der ersten Bohrung 60 anstehenden Druck des ersten Druckbehälters 5 anlaufen muß. Aufgrund des geringeren Druckes im Druckraum 70 (verglichen mit dem Druck im hydraulischen Spalt 66) wird der Leckagekraftstoff den Druckraum 70 und die kraftstof fzuführende erste Bohrung 60 passierend in den ersten Druckbehälter 5 gelangen (für die Dauer der Ruhestellung der Düsennadel).

Eine weitere modifizierte Version der Ausführung gemäß Figur 11 veranschaulicht Figur 12. Ihr liegt der Gedanke zugrunde, den vergleichsweise kleinen Verstellweg des Stabes 40 (ca. 0,16 mm bei einer magnetischen aktiven Stablänge von 100 mm, in einen größeren Hubweg der Düsennadel 42 umzuwandeln (ca. 0,4 mm). Dies ist möglich, in dem der Durchmesser des ersten Kolbens 43 größer als der Durchmesser der als Kolben ausgebildeten Düsennadel 42 ausgelegt wird. Für vorgenanntes Beispiel der hydraulischen "Wegverstärkung" ist bei angenommen Schaftdurchmesser des Kolbens der Düsennadel 42 von 6 mm ein Durchmesser des ersten Kolbens 43 von etwa 10 mm erforderlich.

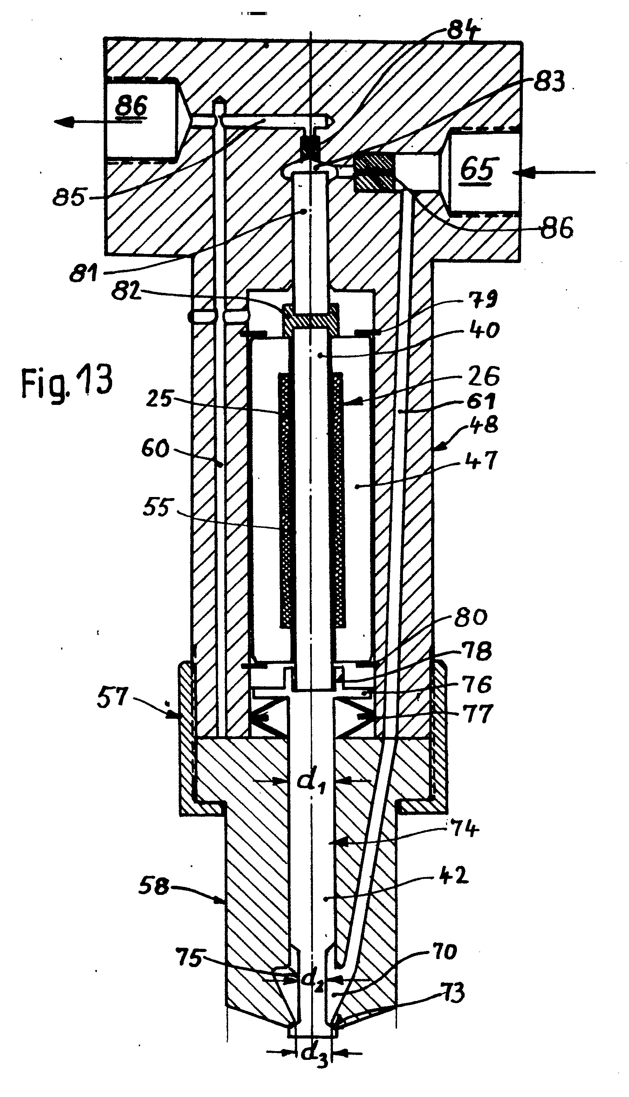

Eine weitere Modifikation des Druckfreigabeventils gibt Figur 13 wieder. Das, die konstruktive Ausgestaltung dieser Vorrichung bestimmende Konzept geht von einer sogenannten "Sitzspalt-Düse" aus, deren Ventilnadelöffnungs- und -schließbewegung - im Vergleich zu den bisher beschriebenen Düsenausführungen - in einem umgekehrten Richtungssinne stattfindet. Dies erlaubt bei Verwendung von positver magnetostriktivem Material für das Stellglied 26 den Entfall des sonst zur Bereitstellung der Vormagnetisierung seriell in den Magnetisierungspfad einzufügenden Dauermagneten 49 (Figur 10).

Zudem ist es bei geeigneter geometrischer Auslegung von Ventilsitz 73 und Düsennadel 42 in einem gewünschten Sinne möglich, die vom düsennahen Druckraum 70 ausgehende, hydraulische Axialkraft eines Düsennadelschaftes 74 hinsichtlich Vorzeichen wie auch Betrag innerhalb verhältnismäßig weiter Grenzen festzulegen.

Der damit gewonnene Freiheitsgrad dieses Auslegungsparamters ist spätestens dann willkommen, wenn es um die Dimensionierung von Ventilsitzpressung und Schließzeit mit ihren divergierenden Kraftanforderungen geht (optimale Sitzpressung verlangt vergleichsweise kleine Axialkraft; möglichst kleine Ventilschließzeit erfordert große Axialkraft).

Zugleich erlaubt dieser Ventiltyp eine Teilkompensation des hohen Kraftstoffdruckes, was zu einer Verringerung der Axialkräfte im Düsennadelschaft 74 bis hinunter zu einer Größenordnung führt, wie sie von den vorstehend erwähnten Ansprüchen der Sitzpressung und der Schließzeit her bestimmt ist. Zusammen mit der vorteilhaften Düseneigenschaft, bereits bei sehr kleinen Nadelerhebungen einen großen Abspritzquerschnitt freizugeben, bedeutet der verringerte Stellkraftaufwand ein erheblich schwächer dimensioniertes Stellglied 26 (geringerer Querschnitt und damit kompaktere Einheit) sowie den Entfall von hydraulischen Bewegungsverstärkern, was ein kostengünstigeres System verspricht. Ebenfalls aufwands-und damit kostenmindernd ist der Entfall des zweiten Druckbehälters 9 (Figur 1) zu werten, dessen Funktion nicht mehr benötigt wird. Von gewichtiger Bedeutung hinsichtlich der Einflußmöglichkeit ist das Vermögen der Düsen, den Querschnitt des Strahles in Abhängigkeit vom Kub des Düsennadelschaftes 74 zu ändern.

Einer eingehenden Funktionsbeschreibung sei zunächst eine kurze Erläuterung von Einzelheiten des Aufbaus vorausgestellt.

Zwei Komponenten, Düsenhalter 48 sowie Düsenkörper 58 sind vermittels Überwurf-Gewindering 57 miteinander verschraubt und stellen in dieser Gesamtheit den Gehäusekörper des Druckventils dar. Axial im Düsenkörper 58 verschieblich befindet sich der Düsennadelschaft 74 mit dem Durchmesser d1, an dessen unterem Ende eine umfangsparallele Nut 75 ausgenommen ist in deren Bereich der Düsennadelschaft 74 eine Verjüngung mit dem Durchmesser d2 aufweist. Zusammen mit einer, radial gegenüber im Düsenkörper 58 befindlichen weiteren Umfangsnut entsteht der Druckraum 70 dessen Druckversorgung über die zweite Bohrung 61 erfolgt. Das untere Ende des Düsenkörpers 58 ist zu einem Ventilsitz mit einem Innendurchmesser d3 ausgeformt. Zusammen mit dem, zu einem - ebenfalls Kegelsitzfunktion besitzenden - kopfartig ausgebildenten Ende des Düsennadelschaftes 74 entsteht eine, die hydraulische Schaltfunktion übernehmende Dichtfläche, die bei Öffnen des Sitzes den Zerstäubungsvorgang am Außenumfang (einem Brennraum eines nicht dargestellten Zylinders zugewandt) des entstehenden Sitzspaltes schafthubabhängig steuert.

Das der Zerstäuberdüse abgewandte Ende des Düsennadelschaftes 74 trägt einen Bund 76 der als Widerlager für ein Tellerfederpaar 77 dient. Sowohl der radialen Führung des Stellgliedes 26 wie dessen axialer Abstützung dient eine koaxial ausgebildete sacklochartige Vertiefung 78 im Stirnbereich des Düsennadelschaftes 74. Wie bereits beschrieben, ist aber der magnetostriktive Stab 40 von einem lamellierten, magnetischen Rückschluß 47 umgeben, das von einem Solenoid 25 bei deren Strombeaufschlagung erregt wird. Der Rückschluß 47 ist in axialer Richtung im Düsenhalter 48 durch zwei Sicherungsringe 79, 80 fixiert. Der elektrische Leitungsanschluß des Solenoids 25 sowie dessen Gehäusedurchführung wurde in der Darstellung der besseren Übersichtlichkeit halber weggelassen.

Ein axial verschieblicher Hilfskolben 81 ist per Kraftschluß über ein Zwischenstück 82 mit dem verbleibenden Ende des Stabes 40 verbunden und ragt mit seinem anderen Ende in eine Dämpferkammer 83. Über eine Entlüftungsbohrung 84 erfolgt ein Druckausgleich zum Kanal 85 hin der seinerseits mit der ersten Bohrung 60 (für Leckagekraftstoff aus dem Ringspalt 55 des magnetischen Rückschlußes 47 stammend) verbunden in den dritten Anschluß 86a mündet der als Leckageabfluß fungiert. Die Druckversorgung der Dämpferkammer 83 erfolgt vom zweiten Anschluß 65 her über eine Drossel 86, wobei Anschluß 65 mit dem ersten Druckbehälter 5 in Verbindung steht. Ebenfalls vom Anschluß 65 zweigt die zweite Bohrung 61 ab, die als Zuleitung zum Druckraum 70 fungiert.

Die Wirkungsweise ist wie folgt. Mit Hilfe des schwach ausgelegten Tellerfederpaares 77 wird zum einen der Düsennadelschaft 74 daran gehindert den Ventilspalt zu öffnen (ausgelöst von Gewichtskraft), zum anderen hat sie gleichzeitig den, vom Druck innerhalb der Dämpferkammer 83 ausgehenden, entgegengesetzt gerichteten Zwang des Hilfskolbens 81 mit Kraftüberschuß zu überwinden um den Dichtspalt des Ventilsitzes zuverlässig geschlossen zu halten. Letztgenannte Funktion ist während der Phase des Aufladens des ersten Druckbehälters 5 von Bedeutung (Anlaßvorgang nach längerem Stillstand) um einen unkontrollierten Übertritt von Kraftstoff in den Brennraum auszuschließen.

Das eigentliche Schließkraftaufkommen - während des Normalbebetriebs des Motors - entstammt jedoch der Wirkung des Kraftstoffdruckes im Druckraum 70. Letztlich also dem Druck im ersten Druckbehälter 5. Entsprechend der Differenz der beiden hydraulischen Wirkflächen des Düsennadelschaftes 74 im Bereich der Nut 75 ergibt sich bei geeigneter Dimensionierung eine axiale Überschußkraft im Düsennadelschaft 74 die zum zuverlässigen Abdichten gegen den hohen Kraftstoffdruck führt.

Vorerwähnte, hydraulische Wirkflächen sind Kreisringflächen, wovon die im Schließsinne wirkende von der Durchmesserdifferenz d1 - d2 beschrieben wird, hingegen die im Öffnungssinne wirkende von der Durchmesserdifferenz d3 - d2 bestimmt ist.

Wie bei den bisher beschriebenen Versionen, dient ein dynamisch wirkendes hydraulisches Widerlager dem Ausgleich unterschiedlicher Ausdehnungen (temperaturbedingt) von Düsenhalter 48 plus Düsenkörper 58 und dem Stellglied 26. Wurde bisher die Ausgleichsbewegung mit der Funktion eines hydraulischen Koppelspaltes verbunden, damit das aktive Ende des Stellgliedes 26 kraftschlüssig mit dem Düsennadelschaft 74 verbindend (während sich das inaktive Stellgliedende form- oder kraftschlüssig am oberen Teil des Düsenhalters 48 abstützt) ist diesmal das inaktive Stellgliedende Bestandteil des Ausgleichsgeschehens. Besagtes inaktive Stellgliedende stützt sich über das Zwischenstück 82 auf den Hilfskolben 81 ab, der seinerseits in die Dämpferkammer 83 eintaucht und vom dort vorherrschenden Druck eine, im Ventilöffnungssinn wirkende, axiale Kraft eingeprägt erhält. Hinsichtlich seines Betragens ist der Druck in der Dämpferkammer 83 vom Verhältnis der Bohrungsdurchmesser der Entlüftungsbohrung 84 und der Drossel 86 abhängig. Der Strömungswiderstand der Drossel 86 ist im Vergleich zu dem Wert, der sich aus der Parallelschaltung der Strömungswiderstände sowohl des Dichtspaltes von Hilfskolben 81 wie der Entlüftungsbohrung 84 der Dämpferkammer 83 ergibt, sehr hoch zu wählen, um den Kammerdruck niedrig zu halten. Der Durchmesser der Entlüftungsbohrung 84 ist möglichst klein zu dimensionieren um unnötige Leckagemengen zu vermeiden. Die Einleitung des Spritzvorganges geschieht in üblicher Weise infolge magnetischer Erregung des Solenoides 25. Die im Gefolge eintretende Längung! des Stellgliedes 26 aus positiv magnetostriktivem Material überträgt sich unter Überwindung sowohl der Federkraft des Tellerfederpaares 77 wie der hydraulischen Schließkraft (vom Druck in der Druckkammer 70 ausgelöst) auf den Düsennadelschaft 74, der seinerseits durch Öffnen des Ventilspaltes den Kraftstoff-Fluß freigibt. Die für die Dauer der Kraftstoffeinspritzung nicht zu vermeidende Mikrobewegung des Hilfskolbens 81 - infolge Nachgiebigkeit des hydraulischen Widerlagers, wesentlich von der Leckage im Dichtspalt des Hilfskolbens 81 bestimmt - führt beim Schließvorgang des Ventils (entgegen der Kraft des Stellgliedes 26) zu einer kurzzeitigen, durchaus nicht unwillkommenen Erhöhung der Ventilschließkraft und zwar solange, bis der, für die Ruhephase des Ventils beharrungstypische Gleichgewichtszustand im kraftübertragenden Pfad (Reihenschaltung aus Düsennadelschaft 74, Stab 40) vom hydraulischen Widerlager hergestellt wurde. Wiederum liegt ein Verband vor, der eine Auflösung des Einspritzvorganges in eine hochfrequente Folge von Schließ-und Öffnungsbewegungen zuläßt (zeitliche Modulation der Kraftstoffzerstäubung im Hinblick auf eine Optimierung des sogenannten Kraftstoffeinspritzgesetzes). Ein davon ausgehender Anstoß unerwünschter Resonanzzustände ist sicher ausschließbar, wenn die Erregerfrequenz des Stellgliedes 26 durch geeignete Wahl unterhalb der niedrigsten Eigenfrequenz (Axial- und Biege-Mode) der, den Kraftpfad bildenden, in Reihe geschalteten Komponenten bleibt.

Geht es darum, die unerwünschte Kraftstofflekkage des aus dem Hilfskolben 81 gebildeten hydraulischen Widerlagers zu vermeiden, verspricht ein, nach ausschließlich mechanischem Wirkprinzip arbeitendes Widerlager einen Ausweg.

Aufbau und Wirkungsweise desselben seien anhand der Figuren 14 bis 16 erläutert. Die zur Realisierung des hydraulischen Widerlagers benötigten Komponenten wie der Kanal 85, die Entlüftungsbohrung 84 und die Drossel 86 können dabei vollständig entfallen.

Das, den bisherigen Abschluß des oberen Stellgliedendes bildende Zwischenstück 82 wird nunmehr durch ein forthin als Spreizkeillager 87 bezeichnetes Teil ersetzt, das im unteren Teil mit einer sacklochartigen Ausnehmung 88 für eine radiale Fesselung des Stabes 40 des inaktiven Stellgliedendes sorgt .

Mit seinem Außenumfang taucht ein Gehäuse 89 - axial verschiebbar - in eine ebenfalls sachlochartig geschaltete zweite Ausnehmung 90 um auch dort die radiale Führung des Stabes 40 des Stellgliedes 26 sicherzustellen. Im Inneren der Ausnehmung 88 des Spreizkeillagers 87 - an der, dem Stellglied 26 abgewandten Stirnseite befindlich - sind zwei, in radialer Richtung zueinander bewgliche erste und zweite Keilstücke 91 und 92 derart lose übereinander gelegt, daß sie sich mit ihrem unter einem Winkel $\phi$ angeschrägten Flächen berühren. Zwei ebenfalls radial wirkende Federn 93 und 94 dienen sowohl als Anschlag aber zugleich auch als Verspannkraft-Lieferant. Ebenfalls lose eingelegte Segmentstücke 95 und 96 (Figur 15) sorgen für eine Seitenführung der beiden Keile.

Die Wirkungsweise dieses "selbstjustierenden Spreizkeillagers" sei zunächst für den nichtaktiven Zustand des Ventils (geschlossen!) erläutert. Die dem Düsennadelschaft 74 (Figur 13) von dem Tellerfederpaar 77 sowie Druckkamer 70 her eingeprägte Schließkraft sorgt, wie bereits beschrieben, für ein Schließen des Ventilspaltes. Wird nun das Solenoid 25 nach Figur 13 während der Geschlossen-Phase des Ventils mittels eines freilaufenden Konstantfrequenzgenerators 38 (Figur 4) eine hochfrequente Stromimpulsfolge eingeprägt (Formiersignal), wollen die Enden des Stellgliedes 26 (Figur 13) gleichfrequente, gegenphasige Längsschwingungen zum Schwerpunkt des Stellgliedes 26 hin ausführen. Das dem Spreizkeillager 87 zugewandte Stellgliedende öffnet somit den Berührungskontakt zwischen den Elementen Gehäuse 89, Keilstücke 91, 92 und Düsenhalter 48 des Kraftpfades hochfrequent intermittierend, so daß die radial wirkenden Federn 93, 94 in der jeweils kurzen Öffnungszeit Gelegenheit haben, die beiden Keilstücke 91, 92 in extrem kleinen Wegschritten in radialer Richtung, also aufeinander zu zu bewegen (axiale Länge des Lagers wächst).

Andererseits entwickelt das Stellglied 26 während der vom Formiersignal erzwungenen Expansionsphasen wiederum Druckkräfte (durch Massenträgheit des Stellgliedes 26 bedingt) die das Lager in entgegengesetzter Richtung axial beaufschlagen (verglichen mit dem jweils vorausgegangenen Fall des Berührungskontakt-Öffnens). Diese Druckkraftimpulse erfahren an der, mit dem Winkel $\phi$ geneigten Berührungsstelle der beiden Keilstücke 91, 92 eine Kraftzerlegung mit der Folge des Entstehens eines radialen Kräftepaares, welches die beiden Keilstücke 91, 92 so zu verschieben trachtet, daß sie sich voneinander entfernen wollen, soweit dies die Kräfte der Federn 93 und 94 zulassen. Auf diese Weise entsteht eine axiale Nachgiebigkeit des Lagers in wiederum sehr kleinen Wegschritten und zwar im Bereich von Bruchteilen eines Mikrometers. Bei geeigneter Abstimmung der Federkennlinien der Federn 93 und 94, sowie des Flächenneigungswinkels , wie auch der formiersignalabhängigen Wegamplitude des Stellgliedes 26 stellt sich ein solcher "dynamischer Gleichgewichtszustand" des Lagers ein, daß die Summe aller Spaltweiten wie sie sich zwischen den Berührungskontaktstellen (Stellglied 26, Gehäuse 89 Keilstücke 91, 92 und Düsenhalter 48) ergeben, annähernd gleich der formiersignalabhängigen Stellgliedamplitude selbst ist. Letztere sollte geringfügig größer sein als die Rauhtiefe aller, an der radialen Bewegungskomponente des Ausgleichsvorganges beteiligten und sich relativ zueinander bewegenden, in Reibkontakt stehenden Flächen.

Um den elektrischen Energieaufwand zum ständigen "Formieren" des Lagers minimal zu halten, ist es sinnvoll, die mechanische Resonanzfrequenz des Kraftpfades als Impulsfolgefrequenz des "Formierstromes" zu wählen. Vermerkt sei, daß die, dem freilaufenden Konstantfrequenzgenerators 38 (Figur 4) entstammende Sollwertspannung für den Formierstrom nicht ausschließlich während des geschlossenen Zustandes des Ventils das Solenoid 25 (Figur 13) des Magnetpfades bedienen soll, vielmehr ist vorstellbar, daß das Formiersignal ständig im Eingriff ist (also auch während des Ventilöffnens). Für den bereits in Figur 4 beschriebenen Erregerstrombildner bedeutet dies lediglich eine Superposition der beiden Sollwertspannungen für Formier-und Ventilöffnungsstrom in einem Summierverstärker 36.

Es ist unschwer einzusehen, daß zusätzlich auf das Spreizkeillager wirkende, quasistationäre Kräfte, z. B. als Auswirkung thermisch bedingter Differenzdehnungen zwischen Stellglied 26, Düsenhalter 48 und Düsenkörper 58 ebenfalls von diesem System über die selbsttätige Lageänderung der Keilstücke 91 und 92 abgebaut werden können. Infolge Wahl eines sehr kleinen Flächenneigungswinkels (Haftreibung der Keile gegenüber radialen Bewegungszwängen soweit solche von quasistationären Axialkräften ausgelöst werden) ist sichergestellt, daß der Längenausgleichsvorgang des Lagers sehr langsam verläuft, was im Falle der vorerwähnten, thermisch bedingten Differenzdehnung zwischen Düsenhalter 48 und Stellglied 26 - als einem ebenfalls sehr langsamen Geschehen - durchaus tolerierbar ist.

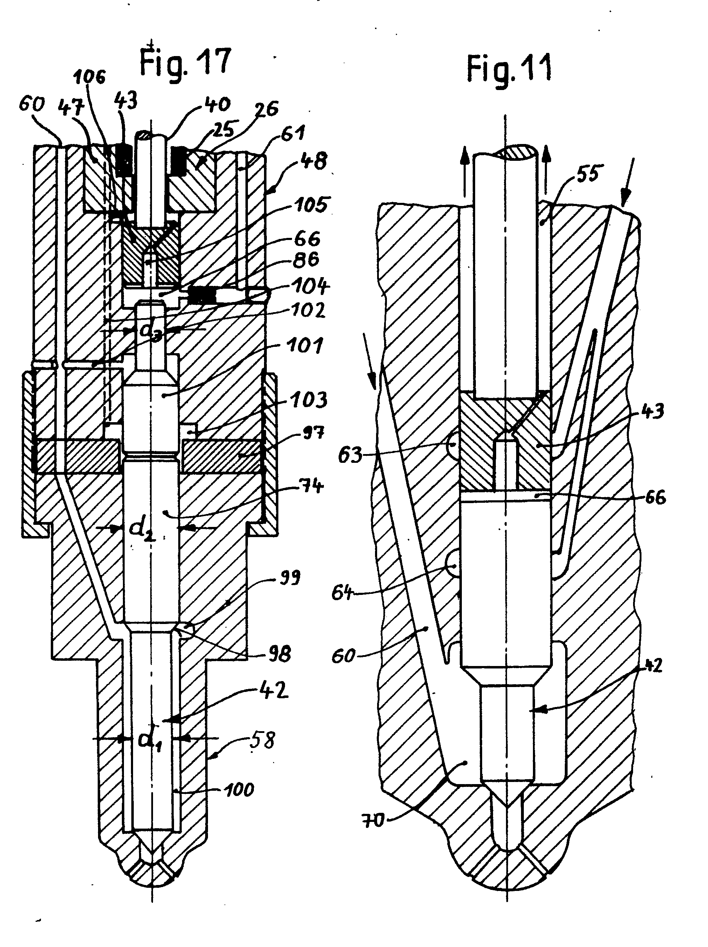

Eine weitere Variante des "schnellen Druckfreigabeventils" ist in Figur 17 dargestellt. Wie auch bei der Verwendung der sogenannten Ringspaltdüse nach Figur 12 geht es hierbei um die Minimierung des Stellkraftbedarfes der Düsennadel 42. Hierzu kommt der Vorteil der Einsatzmöglichkeit von bewährten Mehrlochdüsen zur Kraftstoffzerstäubung. Das Fehlen von Eigenformen entwickelnden Bauteilen wie Federn, sichert die angestrebte Eignung zum hochfrequent modulierten Öffnen und Schließen der Düsennadel 42.

Wie bei der Mehrzahl der zuvor beschriebenen Ausführungen sind die beiden Gehäusekomponenten Düsenhalter 48 und Düsenkörper 58 über eine Zwischenplatte 97 druckdicht mit dem Überwurf-Gewindering 57 miteinander verschraubt. Der im Solenoid 25 des Düsenhalters 48 längsverschieblich bewegbare Stab 40 zusammen mit der Düsennadel 42 sind wie sonst üblich gestaltet, zeichnen sich jedoch durch eine sehr kleine Masse aus. Im Bereich einer Düsennadeldruckschulter 98 mündet die erste Bohrung 60 in einen Ringraum 99, von dem aus der weitere Kraftstofftransport zur Düse über einen Ringspalt 100 erfolgt. Verbunden ist die erste Bohrung 60 mit dem ersten Druckbehälter 5. Einzelheiten über die Oberteil-Gestaltung des Ventils wurden weggelassen, da sie identisch mit der in Figur 10 dargestellten Ventilversion sind, von der auch die Bezeichnungen funktionsgleicher Bauteile übernommen wurden.

Im Berührungskontakt mit der Stirnfläche des Düsennadelschaftes 74 befindlich und längsverschieblich in das untere Ende des Düsenhalters 48 eintauchend, sorgt ein Doppelkolben 101 für eine Teilkompensation der am Düsennadelschaft 74 angreifenden, hydraulisch erzeugten Öffnungskraft. Der, die Druckschulter 98 des Doppelkolbens 101 umgebende Ringraum 99 erhält seine Druckeinspeisung von einem Kanal 102 der als Stichleitung von der ersten Bohrung 60 abzweigt. Im Bereich des Stirnflächenkontaktes zwischen den Enden des Düsennadelschaftes 74 und des Doppelkolbens 101 befindet sich ein Sammelraum 103 zur Aufnahme von Leckagekraftstoff. Entsorgung erfährt dieser über einen Rücklaufkanal 104.

Das dem Düsennadelschaft 74 abgewandte Ende des Doppelkolbens 101 ragt in den hydraulischen Spalt 66 dessen Druckversorgung über die Drossel 86 von einem Kanalabschnitt her erfolgt, der seinerseits an die Hilfsdruck führende zweite Bohrung 61 angeschlossen ist.

Die zweite, den hydraulischen Spalt 66 begrenzende, größere Stirnfläche gehört dem ebenfalls längsverschiebbaren ersten Kolben 43, dessen zweite Stirnfläche eine axiale Vertiefung aufweist, mit der eine radiale Führung und zugleich axiale Abstützung des kraftschlüssig angekoppelten Stellgliedes (siehe hierzu auch Figur 10) verwirklicht wird. Ausgehend von einer dem Spalt 66 zugewandten Axialbohrung 105 in der Stirnfläche des ersten Kolbens 43 sorgt eine Kapillarbohrung für die bereits in Figur 10 beschriebene Dauerentlüftung des Spaltvolumens. Abgeführt wird der in Nähe der -am ersten Kolben 43 befindlichen - Stellgliedabstützung austretende Leckagekraftstoff in den Rücklaufkanal 104 und zwar über eine Stichleitung 106.

Die Wirkungsweise der Vorrichtung ist weitgehend identisch mit der Ausführung wie sie in den Figuren 10 und 12 dargestellt ist. Zur Abgrenzung der verbesserten Eigenschaften sei nochmals kurz auf das Wirkprinzip eingegangen.

Im Ruhezustand (Ventil geschlossen) besitzt das Stellglied 26 seine maximale Länge (bei positiv magnetostriktiven Werkstoff ist das Solenoid 25 entregt, die Magnetisierung des Stellgliedes 26 geht ausschließlich vom seriell in den magnetischen Rückschluß 47 eingefügten Dauermagnet 49 aus; siehe Figur 10). Das der Gehäuseabstützung abgewandte Ende des Stellgliedes 26 erfährt eine Krafteinprägung die über den ersten Kolben 43 vom Druck im Spalt 66 ausgeht und auf diese Weise den ferritischen Stab 40 mit vergleichsweise geringer Kraft vorspannt. Wiederum erfüllt der Spalt 66 zwei Funktionen. Zum einen gleicht er temperaturbedingte Differenzdehnungen zwischen dem Stellglied 26 und dem Düsenhalter 48 aus, zum anderen verwirklicht er mit der Kombinierung von zwei voneinander verschiedenen hydraulischen Wirkflächen die Funktion der Wegverstärkung. Letztere, mit einem angestrebten Wert von etwa 2,5 würde dann einem Verhältnis der Durchmesser des ersten Kolbens 43 zu dem dünneren Schaft des Doppelkolbens 101 von 1,58 entsprechen. Eingestellt wird der Druck im Spalt 66 mit dem Bohrungsdurchmesser der Drossel 86, die für einen definierten vom konstantgeregelten Versorgungsdruck aus dem zweiten Druckbehälter 9 abhängigen Volumenstrom sorgt, sofern die Strömungswiderstände der Kolbendichtspalte sowie der Kapillarbohrung in bekannter Weise berücksichtigt wurden. Bedingt durch Fertigungstoleranzen können vorgenannte Kolbendichtspalte Streuungen unterliegen, die unerwünschte Toleranzen des Arbeitsdruckes im Spalt 66 nicht ausschließen. Besagte Kolbendichtspalte können in ihrer negativen Auswirkung dadurch ausgeschaltet werden, indem in die Schäfte der beteiligten Kolben (oder in die Innenoberfläche der zugehörigen Bohrungen) abgestützte Dichtringe eingelassen werden, die eine Leckage nahezu ausschließen. Dann hängt die Druckeinstellung im Spalt 66 ausschließlich von der besser beherrschbaren Tolerierung der Bohrungsdurchmesser von Drossel 86 und der Kapillarbohrung ab. Ergänzend ist zu vermerken, daß auch im vorliegenden Falle die Höhe des Druckes im Spalt 40 wie in den Figuren 10 und 12 wiedergegebenen - Ausführungsbeispiel geringfügig höher als das Druckniveau im ersten Druckbehälter 5 (Figur 1)

-zu wählen ist. Ein zuverlässiger Schließvorgang des Ventils sowie die Beibehaltung der energiesparenden Überströmregelung des zweiten Druckbehälters 9, bei Mitbenutzung des besseren Glättungsverhaltens von 5 (gegenüber den 9 zugeführten Volumenschüben) sind die erwünschte Auswirkung.

Einer teilweise Kompensation der Öffnungskraft der Düsennadel 42 dient die vom Durchmessersprung (d3 auf d2) des Doppelkolbens 101 gebildete Druckschulter 98. Deren hydraulische Wirkfläche - vom Druck des ersten Druckbehälters 5 bedient - erzeugt eine im Schließsinne wirkende Kraft, die zusammen mit der am dünnen Schaft des Doppelkolbens 101 im gleichen Richtungssinne angreifenden weiteren Kraft (kraftauslösender Druck entstammt hierbei dem Spalt 66) einen Betrag ergibt, der ausreicht um sowohl die notwendige Flächenpressung im Dichtsitz der Düsennadel 42 aufzubringen sowie die hydraulische Öffnungskraft der Düsennadel 42 zu überwinden. Bei geschlossenen Ventil entstammt diese Öffnungskraft der Wechselwirkung des Druckes (aus dem ersten Druckbehälter 5) mit der Wirkfläche, gekennzeichnet von der Durchmesserdifferenz (der Düsennadelabschnitte, d2 minus d1; dabei ist d1 der Durchmesser der axialen Projektion der Kegelmanteloberfläche der Düsennadelspitze sowie diese in Berührungskontakt mit dem Dichtsitz steht.

Im Falle des geöffneten Ventils wird die vom Düsennadelschaft 74 übertragene Verschiebekraft - im Sinne eines weiteren Öffnens wirkend - insofern größer, als sich die hydraulische Wirkfläche nunmehr auf den gesamten Durchmesser d2 erstreckt. Auch diese Kraft muß von der oben beschriebenen "Schließkraft" sicher überwunden werden, können.

Der Vorgang des Ventilöffnens verläuft in gleicher Weise wie bei dem in Figur 10 und 12 dargestellten System. Vermittels Strombeaufschlagens des Solenoids 25 wird der Magnetfluß im Stellglied 26 auf den Wert Null gesteuert was in der Folge zu einer Verkürzung des Stabes 40 führt. Aufgrund des Verschiebekraftüberschußes der Düsennadel in Öffnungsrichtung aber auch infolge des kurzzeitigen Ausfallens der auf d3 wirkenden Schließkraft setzt sich der gesamte bewegliche Verband, bestehend aus den Komponenten ersten Kolben 43, Doppelkolben 101 und Düsennadelschaft 74 im Öffnungssinne in Bewegung, solange, bis die Verkürzung des Stabes 40 einen Stillstand erfährt. Der zurückgelegte Öffnungsweg ist dabei - proportional dem dem Solenoid 25 eingeprägten elektrischen Strom - in beliebiger Größe elektronisch steuerbar.

Während des Öffungsvorganges des Ventiles, aber auch während des Verweilens im geöffneten Zustand, erfährt das Volumen des Spaltes 66 auch hier wiederum eine unmerkliche Zunahme, die sich beim Schließen des Ventils in einer kurzzeitigen (geringfügigen) Erhöhung der Flächenpressung im Ventilsitz auswirkt, was die Zuverlässigkeit des Schließvorganges nachhaltig erhöht.

Abschließend ist anzumerken, daß es auch möglich ist, die vom Impulsdauer-Modulator 24 (Figur 2) innerhalb des Zeitintervalles tg erzeugte Rechteckimpulsserie (Figur 5 bis 9) - innerhalb der Zeitdauer tg per Summierverstärker auf ein Gleichspannungsniveau gleichen Vorzeichens wie die Rechteckspannung anzuheben. Die Folge ist, daß die Düsennadel während des Vorganges der Bewegungsmodulation den Dichtsitz innerhalb der jeweiligen Phase der gesteuerten Abwärtsbewegung nicht mehr schließt. Dies bedeutet, daß der Abspritzvorgang innerhalb der Zeitdauer tg nicht mehr unterbrochen wird, sondern nur noch eine "Intensitätsmodulation" erfährt, was Vorteile hinsichtlich Unterdrückung unerwünscht großer Tropfendurchmesser im Tropfengröße-Spektrum in Aussicht stellt.

## Ansprüche

1. Verfahren zum Einspritzen eines Brennstoffes in einen Brennraum einer luftverdichtenden, selbstzündenden Brennkraftmaschine, bei dem ein Stellglied einer Einspritzdüse elektrisch betätigt und von einer Elektronik angesteuert wird, wobei die Brennstoffmenge einem Druckbehälter entnommen wird, dadurch gekennzeichnet, daß daß Stellglied (26) auf einen Freigabequerschnitt einer Drosselstelle wirkt, daß das Stellglied (26) als magnetostriktiver Stab (40) ausgebildet ist, und daß dieser Freigabequerschnitt von einer durch die Elektronik erzeugte Steuerspannung U gesteuert, zeitlich modulierbar ist.

2. Verfahren nach Anspruch 1, dadurch gekennzeichnet, daß die zeitliche Modulation des Bewegungsablaufes des Stellgliedes in Schwarz-Weiß-Takten erfolgt, und daß bei diesem Takten die eingespritzte Brennstoffmenge durch Varition des Verhältnisses von Öffnungsdauer t0 zu Impulsabstand ta festlegbar ist. (Figuren 5 bis 9)

3. Verfahren nach den Ansprüchen 1 und 2, dadurch gekennzeichnet, daß die zeitliche Modulation derart erfolgt, daß das Verhältnis von Öffnungsdauer t0 zu Impulsabstand ta während der Gesamteinspritzdauer tg konstant ist. (Figur 5)

3a. Verfahren nach den Ansprüchen 1 und 2, dadurch gekennzeichnet, daß die zeitliche Modulation derart erfolgt, daß der über die Gesamteinspritzdauer tg andauernde periodisch modulierte Einspritzvorgang einen solchen zeitlichen Verlauf des Verhältnisses von Öffnungsdauer t0 zu Impulsabstand ta aufweist wie er von der Geradengleichung U = U0 + m • t als Steuerspannung für den Bewegungsablauf des Stellgliedes umschrieben werden kann, worin U0 dem Verhältnis t0/ta proportional ist und m die Steilheit der Steuerspannungsgeraden repräsentiert. (Figur 6)

3b. Verfahren nach den Ansprüchen 2, 3 und 3a, dadurch gekennzeichnet, daß der einer Geradengleichung folgende, zeitliche Verlauf des Verhältnisses von Öffnungsdauer t0 zu Impulsabstand ta eine solche Steilheit m aufweist, daß noch vor Ablauf der Gesamteinspritzdauer tg das Verhältnis t0/ta den Wert 1 erreicht. (Figur 9)

4. Verfahren nach den Ansprüchen 1 und 2, dadurch gekennzeichnet, daß die zeitliche Modulation derart erfolgt, daß der über die Gesamteinspritzdauer tg andauernde Einspritzvorgang in zwei Schritten erfolgt, wovon der erste Schritt eine sehr kurz andauernde, hinsichtlich seiner Zeitdauer t01 eine sogenannte Piloteinspritzung darstellt, der sich ihrerseits im Impulsabstand ta eine sogenannte Haupteinspritzung der Dauer t02 anschließt. (Figur 7)

5. Verfahren nach den Ansprüchen 1, 2 und 3a, dadurch gekennzeichnet, daß die zeitliche Modulation derart erfolgt, daß der der Geradengleichung U = U0 + m • t folgende zeitliche Verlauf des Verhältnisses von t0 zu ta eine solche Steilheit m aufweist, daß noch vor Ablauf der Gesamteinspritzdauer tg das Verhältnis t0 zu ta den Wert 1 erreicht.

6. Verfahren nach den Ansprüchen 1 bis 5, dadurch gekennzeichnet, daß die Anstiegs- und Abstiegsflanken der schwarz-weiß modulierten Bewegungen des Stellorgans eine harmonische Kurvenform besitzen, hierbei im Falle des Flankenanstiegs dem Ausdruck $0{,}5 \; A0 \cdot (-\cos 2\pi ft) + 0{,}5 \; A0$ folgend, hingegen im Falle des Flankenabfalls vom Term $0{,}5 \; A0 \, (\cos 2\pi ft) + 0{,}5 \; A0$ bestimmt und zwar mit Gültigkeit im Intervall $0 < t < \frac{1}{2f}$, wobei A0 den Betrag des beabsichtigten Wegsprunges des Stellgliedes bedeutet und f eine Frequenz darstellt, die mindestens um den Faktor 0,707 kleiner ist als die mechanische Resonanzfrequenz des Stellgliedes. (Figur 8)

7. Verfahren nach den Ansprüchen 1 bis 6, dadurch gekennzeichnet, daß der Impulsabstand ta gleich dem Kehrwert der niedrigsten Frequenz f der Brennraum-Resonanzschwingungsformen gewählt wird.

8. Vorrichtung zur Durchführung des Verfahrens nach Anspruch 1, dadurch gekennzeichnet, daß die Elektronik aus einem Mikroprozessor (21) mit peripheren Einheiten (21a, 27, 24) besteht, wobei Einheit (24) ein Impulsdauer-Modulator, die Einheit (27) ein Digital-Analog-Wandler und die Einheit (21a) ein Kennfeldspeicher ist, daß der Mikroprozessor (21) dabei von drei, die Betriebsparameter Drehzahl, Spritzbeginn und Last erfassenden Gebern (20a, 20d, 20f) ansteuerbar ist, wobei ein erster Impulsgeber (20a) die Drehzahl über einen Anlasser-Zahnkranz (20) erfaßt, während ein zweiter Impulsgeber (20d) mit einer Motor-Nockenwelle (20c) zusammenarbeitet und ein dritter Geber als Schleifer (20f) über ein mit einem Gaspedal verbundenes zweites Potentiometer (20g) die Last erfaßt, daß der erste Impulsgeber (20a) und der zweite Impulsgeber (20d) jeweils über einen Zerocrossingdetektor (20b) und eine Impulsaufbereitungseinheit (20d), und der Schleifer (20f) mit einem Analog-Digital-Wandler (20h) zur Aufbereitung der Gebersignale mit dem Mikroprozessor (21) verbunden ist, und daß der Impulsdauer-Modulator (24) über eine Impulsformerstufe (29) der ein Strom-Spannungs-Wandler (35) nachgeschaltet ist mit dem Solenoid (25) des Stellgliedes (26) verbunden ist. (Figur 2)

8a. Vorrichtung zur Durchführung des Verfahrens nach den Ansprüchen 1 und 8, dadurch gekennzeichnet, daß die Ausgangssignale sowohl der Impulsformerstufe (29) wie eines freilaufenden Konstantfrequenzgenerators (38) den beiden Eingängen eines Summierverstärkers (36) zugeführt werden, um diesen als Signalsumme verlassend über den Strom-Spannungs-Wandler (35) schließlich dem Solenoid (25) des Stellgliedes (26) zugeführt zu werden. (Figur 4)

8b. Vorrichtung zur Durchführung des Verfahrens nach den Ansprüchen 8 und 8a, dadurch gekennzeichnet, daß der Impulsdauer-Modulator (24) von einer Spannungs-Zeitfunktion U1 (t) angesteuert wird, deren Augenblickswert - entsprechend den aktuellen Motorzustandsparametern, gewonnen aus den im Mikroprozessor (21) verarbeiteten Signalen der Geber (20a, 20d, 20f) - zeitrichtig, mit Hilfe des zum Zeitpunkt t0 von der Nockenwelle (20c) in der Impulsaufbereitungseinheit (20e) generierten Markierimpulses getriggert, aus dem Kennfeldspeicher (21a) ausgelesen wird, und über dem Digital-Analog-Wandler geschleust, als Steuerspannung U1 (in Analogform) in den Eingang des Impulsdauermodulators (24) eingespeist wird -hierbei diesen vorher phasenrichtig mittels Start-Stopp-Signal aktivierend, wobei der Modulator seinerseits, proportional dem augenblicklichen Betrag von U1 die Impulsdauer t0 der einzelnen, intern erzeugten, konstant-frequent aufeinanderfolgenden Rechteckimpulse steuert (Figur 5) und wobei mittels einem zweiten Potentiometer (28) die Impulsfolgefrequenz $f = \frac{1}{t_a}$ manuell einstellbar ist. (Figur 2)

8c. Vorrichtung zur Durchführung des Verfahrens nach den Ansprüchen 8 und 8a, dadurch gekennzeichnet, daß die Impulsformerstufe (29) aus einem Schwingkreis besteht, welcher aus einer Umladedrossel (34) und einem Kondensator (33) in Parallelschaltung gebildet wird, wobei die Eigenfrequenz des Schwingkreises derart abgestimmt ist, daß diese Frequenz

$$f = \frac{1}{2\pi \sqrt{L \cdot C}} \leqq 0{,}707 \text{ ,}$$

f0 beträgt, wobei L die Induktivität der Umladedrossel (34), C die Kapazität des Kondensators (33) und f0 die Eigenfrequenz des Stellgliedes (26) bedeuten, daß der Schwingkreis über einen Vorwiderstand (30) und einen dazu in Reihe geschalteten ersten Schalter (31) an eine Eingangsspannung U2 = konstant angelegt ist, daß der erste Schalter (31) als elektronischer Schalter ausgebildet ist, dessen Schalttakt der Beziehung $\frac{L}{R} < \tau < \frac{1}{2f}$ genügt, mit $\tau$ als Mindestschließdauer des ersten Schalters (31), daß ein zweiter Schalter (32) vorgesehen ist, der in Reihe zur Umladedrossel (34) geschaltet ist, welcher ebenfalls elektronisch ausgebildet ist und der Umladung des Kondensators (33) dient, wobei die Organisation der Dauer und des Zeitpunktes der Ansteuerung de ersten Schalters (31) und des zeiten Schalters (32) von einer Steuerlogik ausgeht, und daß eine sich einstellende Kondensatorspannung Uc einer konstanten Spannung U im Summierverstärker (36) überlagert wird, bevor sie dem Strom-Spannungs-Wandler (35) zugeführt wird. (Figur 3)

8d. Vorrichtung zum Durchführung des Verfahrens nach Anspruch 8c, dadurch gekennzeichnet, daß die Steuerlogik zur Beeinflussung des ersten Schalters (31) ;und des zweiten Schalters (32) derart aufgebaut ist, daß die den Impulsdauer-Modulator (24) verlassenden Rechteckimpulse (Figur 2,3) einen Schmitt-Trigger passieren, von dessen invertierenden wie nichtinvertierenden Ausgang je ein Monoflop mit der Imlusdauer $\frac{1}{2f}$ bedient wird, deren Ausgänge wiederum "oder" - verknüpft am Ausgang der erfolgten "oder"-Verknüpfung eine Monoflop-Funktion zur Ansteuerung des zweiten Schalters (32) (Spannung UAS gemäß Figur 3c) zur Verfügung stellen, und daß ferner ein Dritter Monoflop mit der Impulsdauer $(\frac{1}{2f} + \tau)$ gemäß Bild 7c (Spannung UR) vom invertierenden Ausgang des Schmitt-Triggers angeworfen wird, von dessen Ausgangsspannung UR (Bild 7b) mittels einem Differenzbildner die Ausgangsspannung UAS der Monoflopfunktion subtrahiert wird, um die Steuerspannung UNL (Bild 7d) zur Steuerung des elektronischen ersten Schalters (31) zu erhalten.

9. Vorrichtung zur Durchführung des Verfahrens nach den Ansprüchen 1 bis 7, bei dem das Stellglied für eine Düsennadel der Einspritzdüse durch ein von der Elektronik ansteuerbares Solenoid betätigbar ist und der Brennstoff am Einspritzventil von einem Druckbehälter über eine Einspritzleitung zugeführt wird, dadurch gekennzeichnet, daß der von einer Einspritzpumpe (1) mit Druck beaufschlagte erste Druckbehälter (5) als Rohr mit leichter Neigung gegen eine Horizontale ausgeführt ist, wobei sich das Rohr über eine gesamte Länge einer Zylinderreihe erstreckt und dem ersten Druckbehälter (5) ein zweiter Druckbehälter (9) über eine mit Überströmventil (11) und Rückdruckreglerfunktion versehene Verbindungsleitung parallel geschaltet ist, wobei ein Düsenhalter (48) der Einspritzdüse (7) mit einem ersten Anschluß (56) einerseits mit einer Einspritzleitung (6) und andererseits mit einem zweiten Anschluß (65) über eine Druckleitung (6a) mit dem zweiten Druckbehälter (9) verbunden ist, daß der Brennstoff vom ersten Anschluß (56) über eine erste Bohrung (60) im Düsenhalter (48) einem Düsenkörper (58) und vom zweiten Anschluß (65) über eine zweite Bohrung (61) im Düsenhalter (48) dem Düsenkörper (58) zugeführt wird, daß dabei die erste Bohrung (60) in einen Druckraum (70) des Düsenkörpers mündet, welcher sich unmittelbar vor den Einspritzbohrungen einer Mehrlochdüse befindet, und daß die zweite Bohrung (61) im Düsenkörper (58) in einem Bereich zwischen Stellglied (26) und einer Düsennadel (42) mündet, daß die Düsennadel (42) über ein Koppelglied mit dem Stellglied (26) verbunden ist, und daß das Stellglied (26) aus einem magnetostriktiven Stab (40) besteht, welcher im Inneren des Solenoides (25) angeordnet ist. (Figuren 1 und 10)

10. Vorrichtung nach Anspruch 9, dadurch gekennzeichnet, daß das Koppelglied aus einem ersten und zweiten Kolben (43 und 44) besteht, welche in einer gemeinsamen Bohrung des Düsenkörpers (58) axial frei gegeneinander verschiebbar sind und zwischen denen ein Spalt (66) vorgesehen ist, welcher über eine Kapillarbohrung (67) im ersten Kolben (43) mit einer Leckageleitung (54) über Bohrung (69) in Verbindung steht, daß in Mittelquerebene jeder der Kolben (43, 44) eine Ringnut (63, 64) in der Bohrung eingebracht ist, in welche die zweite Bohrung (61) nach einer Verzweigung im Düsenkörper (58) einmündet, und daß der erste Kolben (43) mit dem Stab (40) und der zweite Kolben (44) mit der Düsennadel (42) zusammenarbeitet, wobei unter dem zweiten Kolben (44) eine Leckagenut (62) vorgesehen ist, welche in die Leckagebohrung (54) mündet. (Figur 10)

11. Vorrichtung nach den Ansprüchen 9 und 10, dadurch gekennzeichnet, daß das Koppelglied aus dem ersten Kolben (43) und der in ihrem oberen Bereich als zweiter Kolben ausgebildeten Düsennadel (42) besteht. (Figur 11)

12. Vorrichtung nach den Ansprüchen 9 und 11, dadurch gekennzeichnet, daß der mit dem Stab (40) zusammenarbeitende erste Kolben (43) einen größeren Durchmesser aufweist als die als zweiter Kolben ausgebildete Düsennadel 42. (Figur 12)

13. Vorrichtung zur Durchführung des Verfahrens nach den Ansprüchen 1 bis 7, bei dem das Stellglied für eine Düsennadel der Einspritzdüse durch ein von der Elektronik ansteuerbares Solenoid betätigbar ist und der Brennstoff dem Einspritzventil von einem Druckbehälter über eine Einspritzleitung zugeführt wird, dadurch gekennzeichnet, daß der von der Einspitzpumpe (1) mit Druck beaufschlagte erste Druckbehälter (5) als Rohr mit leichter Neigung gegen eine Horizontale ausgeführt ist, wobei sich das Rohr über eine gesamte Länge einer Zylinderreihe erstreckt und die Einspritzdüse (7) über die Einspritzleitung (6) mit einem zweiten Anschluß (65) an den ersten Druckbehälter (5) angeschlossen ist, daß der zweite Anschluß (65) über eine zweite Bohrung (61) in einem Düsenhalter (48) mit einem Düsenkörper (58) verbunden ist, wobei der Düsenkörper im Bereich der Einspritzbohrung einen Druckraum (70) aufweist, daß die Düsennadel (42) als Düsennadelschaft (74) ausgebildet ist, welcher in einer Bohrung des Düsenkörpers (58) axial beweglich und durch ein Tellerfederpaar (77) im oberen Bereich in Schließstellung gehalten wird, daß der Düsennadelschaft (74) im Bereich des Druckraumes (70) als Differentialkolben mit einer ersten und zweiten Druckfläche ausgebildet ist, derart, daß die erste Druckfläche größer ist als die wirksame zweite Druckfläche, damit die Schließstellung gewährleistet ist, daß der Düsenhalter (48) eine Leckageleitung aufweist, daß das Stellglied (26) am unteren Ende mit dem Düsennadelschaft (74) gekoppelt ist, und daß das Stellglied (26) am oberen Ende einen Hilfskolben (81) aufweist wobei das Stellglied (26) aus einem magnetostriktiven Stab (40) besteht, welcher im Inneren des Solenoids (25) angeordnet ist. (Figuren 1 und 13)

14. Vorrichtung nach Anspruch 13, dadurch gekennzeichnet, daß der Hilfskolben (81) einerseits über ein Zwischenstück (82) mit dem Stab (40) des Stellgliedes (26) und andererseits mit einer Dämpferkammer (83) in Verbindung steht, daß die Dämpferkammer (83) über den zweiten Anschluß (65) und eine Drossel (86) mit dem ersten Druckbehälter (5) in Verbindung steht und eine Entlüftungsbohrung (84) in Zusammenwirken mit Drossel (86) für einen vorgegebenen Druck in der Dämpferkammer (83) sorgt, sowie Leckage über einen Kanal (85) und einen dritten Anschluß (86a) zu einem Tank zurückgeführt wird. (Figur 13)

15. Vorrichtung nach Anspruch 14, dadurch gekennzeichnet, daß anstelle des Hilfskolbens (81) ein Spreizkeillager (87) in einer Ausnehnumg (88) des Gehäuses (89) des Zwischenstücks (82) angeordnet ist, und daß das Spreizkeillager (87) aus ersten und zweiten Keilstücken (91 und 92) gebildet wird, welche zur radialen Führung von ersten und zweiten Federn (93 und 94) und ersten und zweiten Segmenten (95 und 96) umgeben sind, und daß die Keilflächen der Keilstücke (91 und 92) einen Keilwinkel $\phi$ aufweisen. (Figuren 14 bis 16)

16. Vorrichtung nach Anspruch 15, dadurch gekennzeichnet, daß der mit den Keilflächen zusammenwirkende magnetostriktive Stab über das Solenoid derart elektromagnetisch erregt wird, daß die magnetische Erregung durch das Solenoid der Funktion H = H0 • sin (2πf•t) gehorcht, wobei H0 die magnetische Erregung und f die Frequenz derselben bedeuten, daß die durch H im Stab ausgelöste Wechselamplitude sehr klein gehalten wird ($\leq$ 1μm), wobei die Erregerfrequenz f gleich oder größer der Eigenfrequenz der Grundeigenform des magnetostriktiven Stabes zu wählen ist, zumindest jedoch in einer Größenordnung, daß ein periodisches Öffnen der Berührungskontakte der Keilflächen gewährleistet ist. (Figur 8)

17. Vorrichtung zur Durchführung des Verfahrens nach den Ansprüchen 1 bis 7, bei dem das Stellglied für eine Düsen nadel der Einspritzdüse durch ein von der Elektronik ansteuerbares Solenoid betätigbar ist und der Brennstoff dem Einspritzventil von einem Druckbehälter über eine Einspritzleitung zugeführt wird, dadurch gekennzeichnet, daß der von der Einspritzpumpe (1) mit Druck beaufschlagte erste Druckbehälter (5) als Rohr mit leichter Neigung gegen eine Horizontale ausgeführt ist, wobei sich das Rohr über eine gesamte Länge einer Zylinderreihe erstreckt und die Einspritzdüse (7) über die Einspritzleitung (6) mit einer zweiten Bohrung (61) unter Zwischenschaltung einer Drossel (86) mit einem Spalt (66) zwischen dem Stab (40) des Stellgliedes (26) und Düsennadel (42) verbunden ist, wobei die Düsennadel (42) als Differentialkolben mit einer Düsennadeldruckschulter (98) ausgebildet ist und zwischen dem Stab (40) und der Düsennadel (42) ein Doppelkolben (101) und der erste Kolben (43) eingeschaltet ist und die Durchmesser d1, d2 und d3 von Düsennadel (42), Düsennadeldruckschulter (98) und Hilfskolben (101) so aufeinander abgestimmt sind, daß die Schließkraft allein hydraulisch aufgebracht wird. (Figuren 1 und 17)

**B E Z U G S Z E I C H E N L I S T E**

| | |
|---|---|
| 1 | Reiheneinspritzpumpe |
| 2 | Elektromagnet |
| 3 | Füllhebel |
| 4 | Rohrabschnitte |
| 5 | Druckbehälter |
| 6 | Einspritzleitung |
| 6a | Druckleitung |
| 7 | Einspritzdüse |
| 8 | Drossel |
| 9 | zweiter Druckbehälter |
| 10 | separates Pumpenelement |
| 11 | Überströmventil |
| 12 | Ventilfeder |
| 13 | Schleifer |
| 14 | Potentiometer |
| 15 | zweiter Schleifer |
| 16 | zweiter Potentiometer |
| 17 | Umschalter |
| 18 | Membrandruckaufnehmer |
| 19 | Tiefpaßfilter |
| 20 | Anlasserzahnkranz |
| 20a | erster Impulsgeber |
| 20b | Zercrossingdetektor |
| 20c | Nockenwelle |
| 20d | zweiter Impulsgeber |
| 20e | Impulsaufbereitungseinheit |
| 20f | Schleifer |
| 20g | zweiter Potentiometer |
| 20h | Analog-Digital-Wandler |
| 21 | Mikroprozessor |
| 21a | Kennfeldspeicher |
| 22 | erster Signalpfad |
| 23 | zweiter Signalpfad |

| | |
|---|---|
| 24 | Impulsdauer-Modulator |
| 25 | Solenoid |
| 26 | Stellglied |
| 27 | Digital-Analogwandler |
| 28 | zweites Potentiometer |
| 29 | Impulsformerstufe |
| 30 | Vorwiderstand |
| 31 | erster Schalter |
| 32 | zweiter Schalter |
| 33 | Kondensator |
| 34 | Umladedrossel |
| 35 | Spannungsstromwandler |
| 36 | Summierverstärker |
| 37 | Spreizkeillager |
| 38 | Konstantfrequenzgenerator |
| 39 | Zerocrossing-Einheit |
| 40 | ferromagnetischer Stab |
| 41 | Schraube |
| 42 | Düsennadel |
| 43 | erster Kolben |
| 44 | zweiter Kolben |
| 47 | magnetischer Rückschluß |
| 48 | Düsenhalter |
| 49 | Dauermagneten |
| 50 | Luftspalte |
| 51 | Luftspalte |
| 52 | Spalte |
| 53 | Spalte |
| 54 | Leckageleitung |
| 55 | Ringspalt |
| 56 | erster Anschluß |
| 57 | Überwurf-Gewindering |
| 58 | Düsenkörper |
| 59 | Zwischenring |
| 60 | erste Bohrung |

20

| 61 | zweite Bohrung |
|----|----------------|
| 62 | Leckagenut |
| 63 | Ringnute |
| 64 | Ringnute |
| 65 | zweiter Anschluß |
| 66 | hydraulischer Spalt |
| 67 | Kapillarbohrung |
| 68 | Leckageraum |
| 69 | Bohrung |
| 70 | Druckraum |
| 72 | Sitzspalt-Düse |
| 73 | Ventilsitz |
| 74 | Düsennadelschaft |
| 75 | Nut |
| 76 | Bund |
| 77 | Tellerfederpaar |
| 78 | Vertiefung |
| 79 | Sicherungsringe |
| 80 | Sicherungsringe |
| 81 | Hilfskolben |
| 82 | Zwischenstück |
| 83 | Dämpferkammer |
| 84 | Entlüftungsbohrung |
| 85 | Kanal |
| 86 | Drossel |
| 86a | dritter Anschluß |
| 87 | Spreizkeillager |
| 88 | Ausnehmung |
| 89 | Gehäuse |
| 90 | zweite Ausnehmung |
| 91 | erstes Keilstück |
| 92 | zweites Keilstück |
| 93 | Federn |
| 94 | Federn |
| 95 | Segmente |
| 96 | Segmente |
| 97 | Zwischenplatte |

| | |
|---|---|
| 98 | Düsennadeldruckschulter |
| 99 | Ringraum. |
| 100 | Ringspalt |
| 101 | Doppelkolben |
| 102 | Kanal |
| 103 | Sammelraum |
| 104 | Rücklaufkanal |
| 105 | Axialbohrung |
| 106 | Stichleitung |

Fig.1

Fig.2

Fig. 9

$A_i$ $U_{DAW}$

$t_{01}$ $t_{02}$ $t_{03}$ $t_{04}$

$A_0$

$U_0$

$U'_{DAW}$

t

$t_a$ $t_a$ $t_a$ $t_a$ $t_a$ $t_a$

$m \cdot t_a$

$t_g$

Fig. 3

$+U_{konst.}$

R

30 31

L

34

33

$-U$ konst.

$\frac{L}{R} < T < \frac{1}{2f}$

$U_c$

$S_u$

$\Sigma$

$U'_c$

32

29

36

Fig. 3a

Fig. 3b

Fig.3c

Fig.3d

Fig.3e

$U_{RS}$

$t_a$

$t_o$

$t_o$

$T_1$

$\frac{1}{2f}+T$

$\frac{1}{2f}+T$

$U_V$

$U_{AS}$

$U_{AS}$

$U_{AS}$

$U_{NL}$

$U_N$

$\frac{1}{2f}$

$T_2$

$\frac{1}{2f}$

$T$

$T_5$

$\frac{1}{2f}$

$\frac{1}{2f}$

$T$

$+U_C$

$T_1$

$T_2$

$T_3$

$T_4$

$U_C$

$U_C'$

Fig.4

EP 0 431 272 A2

$U_2$

$A_0$ $t_o$ $t_o$ $t_o$ $t_o$ $t_a$ $t_a$ $t_a$ $t_g$

Fig. 5

$U_2$

$t_{o1}$ $t_{o2}$ $t_{o3}$ $t_{o4}$ $A_0$ $U_0$ $t_a$ $t_a$ $t_a$ $t_g$

Fig. 6

$A_i$ $t_{o1}$ $t_{o2}$ $U_2$ $A_0$ $t_a$ $n \cdot t_a$ $t_g$

Fig. 7

$t_o$ $A_0$ $\frac{1}{2f}$ $\frac{1}{2f}$

Fig. 8

41 Fig. 10

56

65

47

60

55

54

59

69

63

64

26

25

49

48

53

61

50

68

57

67

43

66

44

58

62

42

70

# Fig. 12

Fig. 13

$d_1$

$d_2$

$d_3$

Fig. 14

Fig. 15

Fig. 16

## Fig. 17

## Fig. 11